(19)

**Europäisches Patentamt**
**European Patent Office**
**Office européen des brevets**

(11)  **EP 4 571 384 A1**

(12)  **EUROPEAN PATENT APPLICATION**
published in accordance with Art. 153(4) EPC

(43) Date of publication:
**18.06.2025   Bulletin 2025/25**

(21) Application number: **23863531.2**

(22) Date of filing: **07.09.2023**

(51) International Patent Classification (IPC):
*G02B 13/00* (2006.01)      *G02B 9/64* (2006.01)
*G02B 15/14* (2006.01)      *G02B 3/00* (2006.01)
*G02B 13/18* (2006.01)      *H04N 23/55* (2023.01)
*G02B 3/02* (2006.01)

(52) Cooperative Patent Classification (CPC):
**G02B 3/00; G02B 3/02; G02B 9/64; G02B 13/00;
G02B 13/18; G02B 15/14; H04N 23/55**

(86) International application number:
**PCT/KR2023/013431**

(87) International publication number:
**WO 2024/054067 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.09.2022   KR 20220113577
21.09.2022   KR 20220119349**

(71) Applicant: **Samsung Electronics Co., Ltd.
Suwon-si, Gyeonggi-do 16677 (KR)**

(72) Inventors:
• **SEO, Jinseon
Suwon-si Gyeonggi-do 16677 (KR)**
• **KIM, Dongwoo
Suwon-si Gyeonggi-do 16677 (KR)**
• **BAE, Jaecheol
Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54)  **LENS ASSEMBLY AND ELECTRONIC DEVICE COMPRISING SAME**

(57)      According to an embodiment of the present disclosure, a lens assembly may comprise: an image sensor; and as seven lenses sequentially arranged along an optical axis in a direction toward the image sensor, a first lens having positive refractive power, a second lens having negative refractive power, a third lens having positive refractive power, a fourth lens having negative refractive power, a fifth lens having positive refractive power, a sixth lens having positive refractive power, and a seventh lens having negative refractive power. By satisfying [conditional expressions] presented through embodiment(s), the lens assembly may be reduced in size while providing optical performance equivalent to that of an enlarged high-pixel image sensor. Various other embodiments may also be possible.

FIG. 5

**Description**

[Technical Field]

Embodiment(s) of the disclosure relate to a lens assembly, for example, a lens assembly including a plurality of lenses and an electronic device including the same.

[Background Art]

Optical devices, for example, cameras capable of capturing images or videos have been widely used, and digital cameras and video cameras with solid-state image sensors such as charge-coupled devices (CCDs) or complementary metal-oxide semiconductors (CMOS) have become common in recent years. Optical devices with solid-state image sensors (CCDs or CMOSs) have been gradually replacing film-based optical devices because they allow for easier storage, duplication, and movement of images than the film-based optical devices.

Recently, a plurality of optical devices, for example, two or more selected ones of a close-up camera, a telephoto camera, and/or a wide-angle camera have been mounted in a single electronic device to improve the quality of a captured image and provide various visual effects to the captured image. For example, a plurality of cameras with different optical characteristics may be used to obtain images of an object and synthesize them into a high-quality captured image. As electronic devices such as mobile communication terminals or smartphones are equipped with a plurality of optical devices (e.g., cameras) and thus obtain high-quality captured images, they are gradually replacing electronic devices specialized for a shooting function, such as digital compact cameras, and are expected to replace high-performance cameras such as digital single-lens reflex cameras (e.g., DSLRs) in the future.

The above information is presented as background information only to assist with an understanding of the disclosure. No determination has been made, and no assertion is made, as to whether any of the above might be applicable as prior art with regard to the disclosure.

[Detailed Description of the Invention]

[Technical Solution]

According to an embodiment of the disclosure, a lens assembly may include an image sensor, and seven lenses sequentially arranged along an optical axis in a direction toward the image sensor, and including a first lens having a positive refractive power, a second lens having a negative refractive power, a third lens having a positive refractive power, a fourth lens having a negative refractive power, a fifth lens having a positive refractive power, a sixth lens having a positive refractive power, and a seventh lens having a negative refractive power. In an embodiment, the lens assembly may satisfy [Conditional Expression 1] to [Conditional Expression 3] below.

$$[\text{Conditional Expression 1}]$$

$$1 =< efl/f1 =< 2$$

$$[\text{Conditional Expression 2}]$$

$$1.3 =< Fno =< 1.7$$

$$[\text{Conditional Expression 3}]$$

$$0.59 =< TTL/(ImgH*2) =< 0.68$$

Herein, 'efl' may be an effective focal length of the lens assembly, 'f1' may be a focal length of the first lens, 'Fno' is an F number of the lens assembly, 'TTL' may be a distance from an object-side surface of the first lens to the image sensor, and 'ImgH' may be a maximum distance from the optical axis to an edge of an imaging plane of the image sensor.

According to an embodiment of the disclosure, an electronic device may include a lens assembly and a processor configured to obtain an object image using the lens assembly. The lens assembly may include an image sensor, and seven lenses sequentially arranged along an optical axis in a direction toward the image sensor, and including a first lens having a positive refractive power, a second lens having a negative refractive power, a third lens having a positive refractive power, a fourth lens having a negative refractive power, a fifth lens having a positive refractive power, a sixth lens having a positive refractive power, and a seventh lens having a negative refractive power. In an embodiment, the lens assembly may satisfy [Conditional Expression 7] to [Conditional Expression 9] below.

[Conditional Expression 7]

$$1 =< efl/f1 =< 2$$

[Conditional Expression 8]

$$1.3 =< Fno =< 1.7$$

[Conditional Expression 9]

$$0.59 =< TTL/(ImgH*2) =< 0.68$$

Herein, 'efl' may be an effective focal length of the lens assembly, 'f1' may be a focal length of the first lens, 'Fno' is an F number of the lens assembly, 'TTL' may be a distance from an object-side surface of the first lens to the image sensor, and 'ImgH' may be a maximum distance from the optical axis to an edge of an imaging plane of the image sensor.

[Brief Description of Drawings]

The above or other aspects, configurations, and/or advantages of embodiment(s) of the disclosure will be apparent from the following detailed description with reference to the accompanying drawings.

FIG. 1 is a block diagram illustrating an electronic device in a network environment according to an embodiment of the disclosure.

FIG. 2 is a block diagram illustrating an exemplary camera module according to an embodiment of the disclosure.

FIG. 3 is a front perspective view illustrating an electronic device according to an embodiment of the disclosure.

FIG. 4 is a rear perspective view illustrating the electronic device of FIG. 3 according to an embodiment of the disclosure.

FIG. 5 is a diagram illustrating a lens assembly according to an embodiment of the disclosure.

FIG. 6 is a graph illustrating spherical aberration of the lens assembly of FIG. 5 according to an embodiment of the disclosure.

FIG. 7 is a graph illustrating astigmatism of the lens assembly of FIG. 5 according to an embodiment of the disclosure.

FIG. 8 is a graph illustrating distortion rates of the lens assembly of FIG. 5 according to an embodiment of the disclosure.

FIG. 9 is a diagram illustrating a lens assembly according to an embodiment of the disclosure.

FIG. 10 is a graph illustrating spherical aberration of the lens assembly of FIG. 9 according to an embodiment of the disclosure.

FIG. 11 is a graph illustrating astigmatism of the lens assembly of FIG. 9 according to an embodiment of the disclosure.

FIG. 12 is a graph illustrating distortion rates of the lens assembly of FIG. 9 according to an embodiment of the disclosure.

FIG. 13 is a diagram illustrating a lens assembly according to an embodiment of the disclosure.

FIG. 14 is a graph illustrating spherical aberration of the lens assembly of FIG. 13 according to an embodiment of the disclosure.

FIG. 15 is a graph illustrating astigmatism of the lens assembly of FIG. 13 according to an embodiment of the disclosure.

FIG. 16 is a graph illustrating distortion rates of the lens assembly of FIG. 13 according to an embodiment of the disclosure.

Throughout the accompanying drawings, like reference numerals may be assigned to like parts, components, and/or structures.

[Mode for Carrying out the Invention]

As described above, a single miniaturized electronic device may include a standard camera, a wide-angle (or ultra-wide-angle) camera, a close-up camera, and/or a telephoto camera to obtain a plurality of images of an object and synthesize them into a high-quality image. Cameras or lens assemblies may be classified into a standard camera, a wide-angle (or ultra-wide-angle) camera, a close-up camera, and/or a telephoto camera depending on their fields of view (or focal lengths). When a plurality of cameras are mounted on a portable electronic device such as a smartphone, it may be difficult to secure the optical performance of the cameras or a lens assembly. For example, as an electronic device becomes smaller, there may be more limitations on the size or shape of a lens assembly. Although solid-state image sensors are developing rapidly in terms of size and performance, it is difficult to improve the optical performance of the lens assembly due to this poor installation environment. On the other hand, there may be a difficulty in securing mass production while suppressing the increase of manufacturing cost caused by an increase in the number of lens assemblies mounted on a single electronic device.

Embodiment(s) of the disclosure, which are intended to at least address the above-described problems and/or disadvantages and at least provide the advantages described below, may provide a lens assembly which is miniaturized, while providing good optical performance, and/or an electronic device including the same.

Embodiment(s) of the disclosure may provide a lens assembly providing improved optical performance to a degree that may satisfy performance requirements for a high-performance image sensor, and/or an electronic device including the same.

The technical objects to be achieved by the disclosure are not limited to those mentioned above, and other unmentioned technical objects may be clearly understood by those skilled in the art from the following description.

The following description of the attached drawings may provide an understanding of various exemplary implementations of the disclosure, including the claims and their equivalents. Exemplary embodiments disclosed in the following description include various specific details to aid understanding, but are to be considered as one of various exemplary embodiments. Accordingly, those skilled in the art will understand that various changes and modifications of the various implementations described herein may be made without departing from the scope and spirit of the disclosure. In addition, a description of well-known functions and configurations will be avoided for clarity and conciseness.

The terms and words used in the following description and claims are not limited to their referential meanings, but may be used to clearly and consistently describe an embodiment of the disclosure. Accordingly, it will be apparent to those skilled in the art that the following description of various implementations of the disclosure, which is intended to be in conformity with the claims, is provided solely for illustrative purposes, not for restrictive purposes.

Unless the context clearly dictates otherwise, it should be understood that the singular expressions of "a," "an," and "the" include plural referents. Thus, for example, a "component surface" may be meant to include one or more of the surfaces of a component.

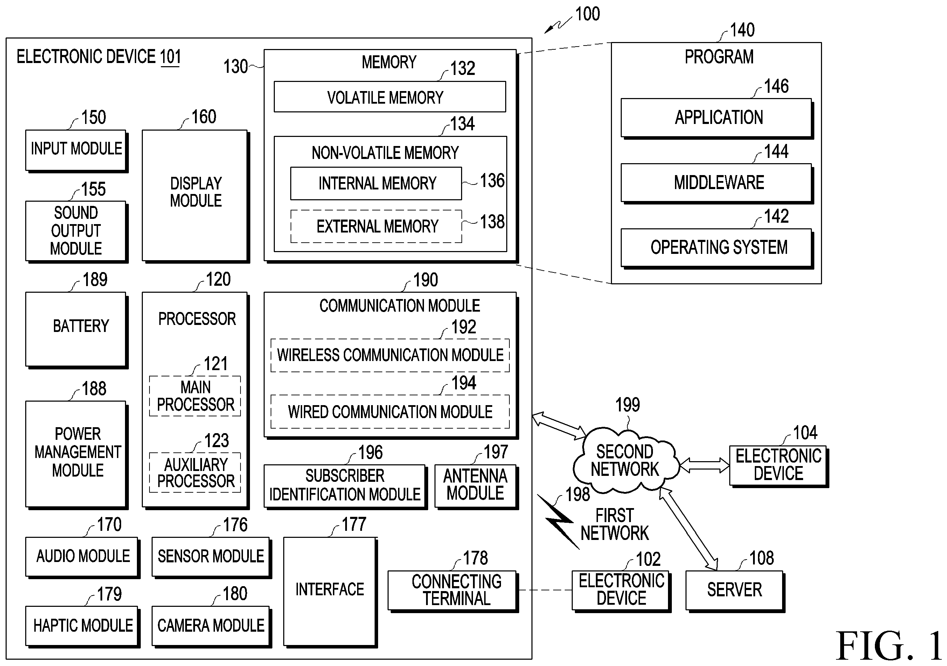

FIG. 1 is a block diagram illustrating an electronic device 101 in a network environment 100 according to an embodiment of the disclosure. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

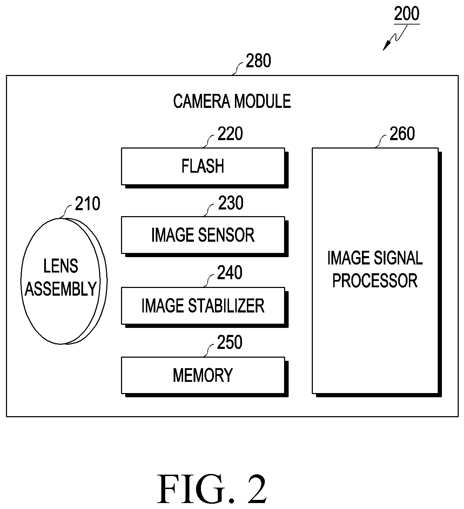

FIG. 2 is a block diagram 200 illustrating a camera module 280 (e.g., the camera module 180 in FIG. 1) according to an embodiment of the disclosure. Referring to FIG. 2, the camera module 280 may include a lens assembly 210, a flash 220, an image sensor 230, an image stabilizer 240, memory 250 (e.g., buffer memory), or an image signal processor 260. In an embodiment, the lens assembly 210 may include the image sensor 230. The lens assembly 210 may collect light emitted or reflected from an object whose image is to be taken. The lens assembly 210 may include one or more lenses. According to an embodiment, the camera module 280 may include a plurality of lens assemblies 210. In such a case, the camera module 280 may form, for example, a dual camera, a 360-degree camera, or a spherical camera. Some of the plurality of lens assemblies 210 may have the same lens attribute (e.g., view angle, focal length, auto-focusing, F-number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 280 or an electronic device (e.g., the electronic device 101 of FIG 1) including the camera module 280. This allows compensating for at least part of a negative effect (e.g., image blurring) by the movement on an image being captured. According to an embodiment, the image stabilizer 240 may sense such a movement by the camera module 280 or an electronic device (e.g., the electronic device 101 in FIG. 1) using a gyro sensor (not shown) or an acceleration sensor (not shown) disposed inside or outside the camera module 280. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160 of FIG. 1. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of a memory (e.g., the memory 130 in FIG. 1) or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 280. An image processed by the image signal processor 260 may be stored back in the memory 250 for further processing, or may be provided to an external component (e.g., the memory 130, the display module 160, the electronic device 102, the electronic device 104, or the server 108 in FIG. 1) outside the camera module 280. According to an embodiment, the image signal processor 260 may be configured as at least part of a processor (e.g., the processor 120 in FIG. 1), or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, an electronic device (e.g., the electronic device 101 in FIG. 1) may include a plurality of camera modules 280 having different attributes or functions. In such a case, at least one of the plurality of camera modules 280 may form, for example, a wide-angle camera and at least another of the plurality of camera modules 280 may form a telephoto camera. Similarly, at least one of the plurality of camera modules 280 may form, for example, a front camera and at least another of the plurality of camera modules 280 may form a rear camera.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiment(s) of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments of the disclosure may be implemented as software (e.g., a program) including one or more instructions that are stored in a storage medium (e.g., internal memory or external memory) that is readable by a machine (e.g., an electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According embodiments, operations performed by the module, the program, or another component may be carried out sequentially, in parallel, repeatedly, or heuristically, or one or more of the operations may be executed in a different order or omitted, or one or more other operations may be added.

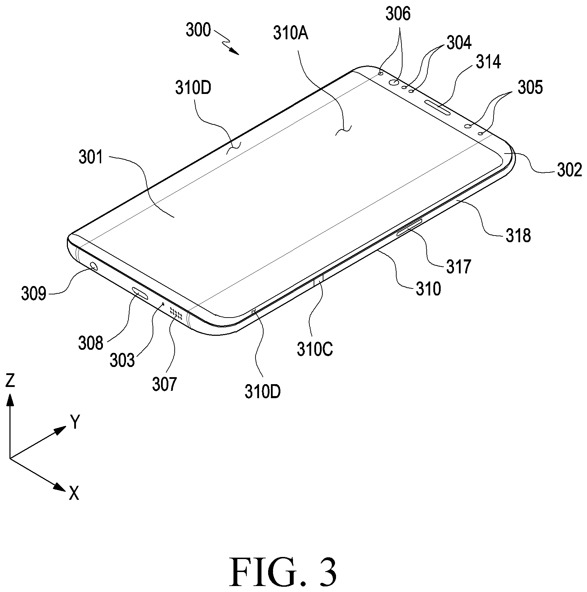

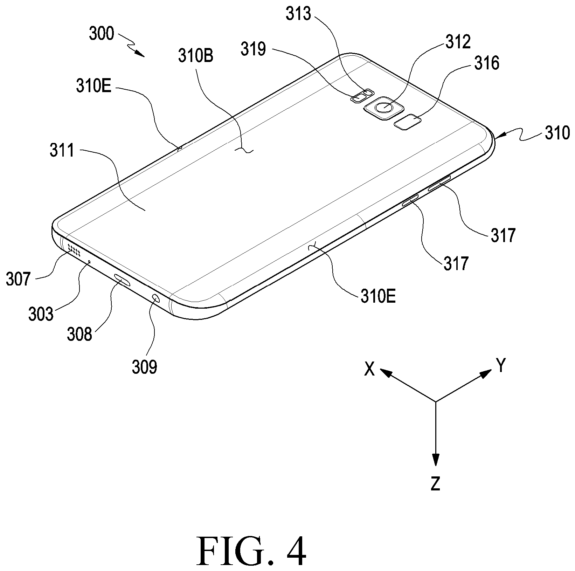

FIG. 3 is a front perspective view illustrating an electronic device 300 (e.g., the electronic device 101 of FIG. 1) according to an embodiment of the disclosure. FIG. 4 is a rear perspective view illustrating the electronic device 300 according to an embodiment of the disclosure.

Referring to FIGS. 3 and 4, the electronic device 300 (e.g., the electronic device 101 in FIG. 1) according to an embodiment may include a housing 310 which includes a first surface (or front surface) 310A, a second surface (or rear surface) 310B, and a side surface 310C surrounding a space between the first surface 310A and the second surface 310B. In an embodiment (not shown), the housing 310 may refer to a structure that forms a portion of the first surface 310A, the second surface 310B, and the side surfaces 310C of FIG. 3. According to an embodiment, at least a portion of the first surface 310A may be formed by a front plate 302 (e.g., a glass plate or polymer plate including various coating layers) which is at least partially substantially transparent. In an embodiment, the front plate 302 may be coupled to the housing 310 to form an inner space with the housing 310. In an embodiment, the term 'inner space' may refer to an interior space of the housing 310 that accommodates at least a portion of a display 301 to be described later or the display module 160 of FIG. 1.

According to an embodiment, the second surface 310B may be formed by a rear plate 311 which is substantially opaque. The rear plate 311 may be formed of, for example, coated or tinted glass, ceramic, a polymer, a metal (e.g., aluminum, stainless steel (STS), or magnesium), or a combination of at least two of these materials. The side surface 310C may be coupled to the front plate 302 and the rear plate 311 and formed by a side bezel structure (or "side member") 318 including a metal and/or a polymer. In an embodiment, the rear plate 311 and the side bezel structure 318 may be integrally formed and include the same material (e.g., a metal material such as aluminum).

In the illustrated embodiment, the front plate 302 may include two first areas 310D, which are bent and extend seamlessly from the first surface 310A toward the rear plate 311, at both long edge ends of the front plate 302. In the illustrated embodiment (see FIG. 4), the rear plate 311 may include two second areas 310E, which are bent and extend seamlessly from the second surface 310B toward the front plate 302, at both long edge ends of the rear plate 311. In an embodiment, the front plate 302 (or the rear plate 311) may include only one of the first areas 310D (or the second areas 310E). In an embodiment, some of the first areas 310D or the second areas 310E may not be included. In these embodiments, when viewed from the sides of the electronic device 101, the side bezel structure 318 may have a first thickness (or width) on a side surface that does not include any of the above first areas 310D or second areas 310E (e.g., a side surface on which a connector hole 308 is formed), and a second thickness less than the first thickness on a side surface that includes the above first areas 310D or second areas 310E (e.g., a side surface on which a key input device 317 is disposed).

According to an embodiment, the electronic device 300 may include at least one of the display 301, audio modules 303, 307, and 314, sensor modules 304, 316, and 319, camera modules 305, 312, and 313 (e.g., the camera module 180 or 280 in FIG. 1 or 2), key input devices 317, a light emitting element 306, or connector holes 308 and 309. In an embodiment, the electronic device 101 may not be provided with at least one (e.g., a key input device 317 or the light emitting element 306) of the components or may additionally include other components.

The display 301 (e.g., the display module 160 in FIG. 1) may be visually exposed, for example, through a substantial portion of the front plate 302. In an embodiment, at least a portion of the display 301 may be exposed through the first surface 310A and the front plate 302 which forms the first areas 310D of the side surface 310C. In an embodiment, a corner of the display 301 may be formed substantially in the same shape as that of an adjacent periphery of the front plate 302. In an embodiment (not shown), a gap between the periphery of the display 301 and the periphery of the front plate 302 may be substantially equal to increase the visually exposed area of the display 301.

In an embodiment (not shown), a recess or an opening may be formed in a portion of a screen display area (e.g., an active area) or an area (e.g., an inactive area) outside the screen display area, and at least one of the audio module 314 (e.g., the audio module 170 in FIG. 1), the sensor module 304 (e.g., the sensor module 176 in FIG. 1), the camera module 305, or the light emitting element 306, which is aligned with the recess or the opening, may be included. In an embodiment (not shown), at least one of the audio module 314, the sensor module 304, the camera modules 305 (e.g., an under display camera (UDC)), a fingerprint sensor 316, or the light emitting element 306 may be included on a rear surface of the screen display area of the display 301. In an embodiment (not shown), the display 301 may be incorporated with or disposed adjacent to a touch sensing circuit, a pressure sensor capable of measuring the intensity (pressure) of a touch, and/or a digitizer that detects a magnetic field-based stylus pen. In an embodiment, at least some of the sensor modules 304 and 319 and/or at least some of the key input devices 317 may be disposed in the first areas 310D and/or the second areas 310E.

The audio modules 303, 307, and 314 may include a microphone hole 303 and speaker holes 307 and 314. A microphone for obtaining an external sound may be disposed in the microphone hole 303, and in an embodiment, a plurality of microphones may be disposed to detect the direction of a sound. The speaker holes 307 and 314 may include an external speaker hole 307 and a receiver hole 314 for calls. In an embodiment, the speaker holes 307 and 314 and the microphone hole 303 may be implemented as a single hole, or a speaker (e.g., a piezo speaker) may be included without the speaker holes 307 and 314.

The sensor modules 304, 316, and 319 may generate an electrical signal or data value corresponding to an internal operating state of the electronic device 300 or an external environmental state. The sensor modules 304, 316, and 319 may include, for example, a first sensor module 304 (e.g., a proximity sensor) and/or a second sensor module (not shown) (e.g., a fingerprint sensor), disposed on the first surface 310A of the housing 310, and/or a third sensor module 319 (e.g., a HRM sensor) and/or a fourth sensor module 316 (e.g., a fingerprint sensor), disposed on the second surface 310B of the housing 310. The fingerprint sensors may be disposed on the second surface 310B as well as on the first surface 310A (e.g., the display 301) of the housing 310. The electronic device 300 may further include a sensor module which is not shown, for example, at least one of a gesture sensor, a gyro sensor, a barometric pressure sensor, a magnetic sensor, an acceleration sensor, a grip sensor, a color sensor, an IR sensor, a biometric sensor, a temperature sensor, a humidity sensor, or an illuminance sensor.

The camera modules 305, 312, and 313 may include a front camera module 305 disposed on the first surface 310A of the electronic device 101, and a rear camera module 312 and/or a flash 313 disposed on the second surface 310B. The camera modules 305 and 312 may include one or more lenses, an image sensor, and/or an ISP. The flash 313 may include, for example, a light emitting diode (LED) or a xenon lamp. In an embodiment, two or more lenses (an IR camera, a wide-angle lens, and a telephoto lens) and image sensors may be arranged on one surface of the electronic device 300.

The key input devices 317 may be disposed on the side surface 310C of the housing 310. In an embodiment, the electronic device 300 may not include some or any of the key input devices 317, and the key input devices 317 which are not included may be implemented in other forms such as soft keys on the display 301. In an embodiment, the key input devices may include the sensor module 316 disposed on the second surface 310B of the housing 310.

The light emitting element 306 may be disposed, for example, on the first surface 310A of the housing 310. The light emitting element 306 may provide, for example, state information about the electronic device 300 in the form of light. In an embodiment, the light emitting element 306 may provide, for example, a light source interworking with an operation of the front camera module 305. The light emitting element 306 may include, for example, an LED, an IR LED, and a xenon lamp.

The connector holes 308 and 309 may include a first connector hole 308 capable of accommodating a connector (e.g., a USB connector) for transmitting and receiving power and/or data to and from an external electronic device and/or a second connector hole (e.g., an earphone jack) 309 capable of accommodating a connector for transmitting and receiving an audio signal to and from an external electronic device.

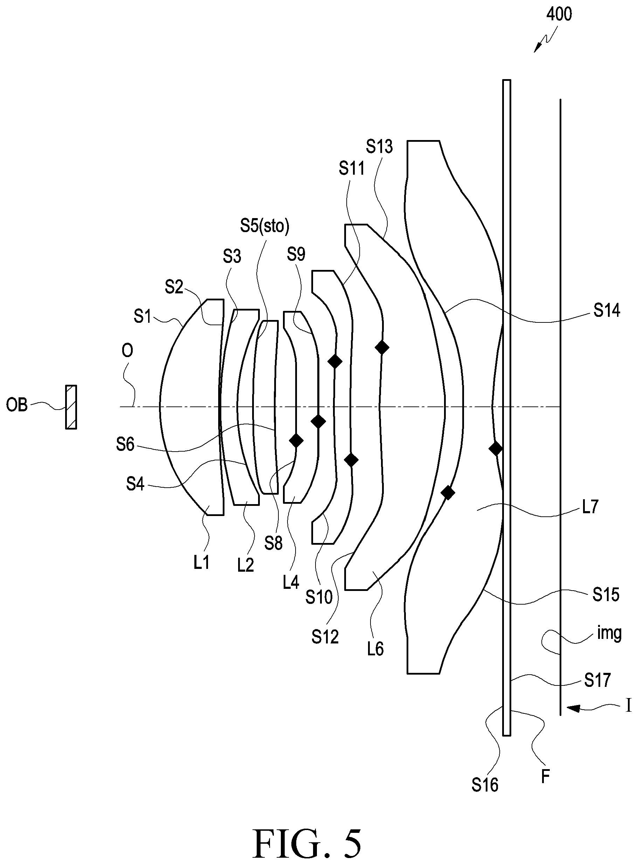

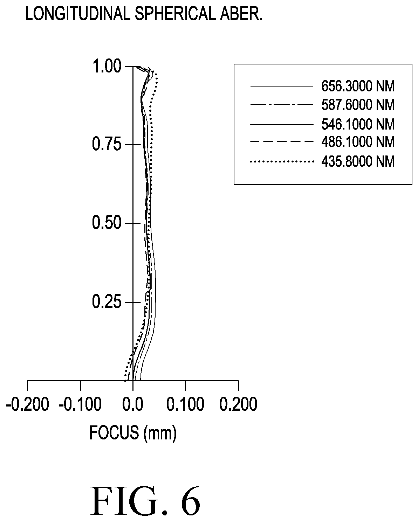

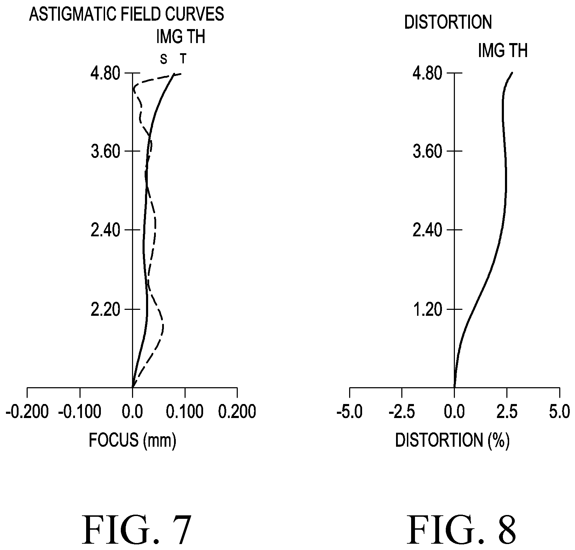

FIG. 5 is a diagram illustrating a lens assembly 400 according to an embodiment of the disclosure. FIG. 6 is a graph illustrating spherical aberration of the lens assembly 400 of FIG. 5 according to an embodiment of the disclosure. FIG. 7 is a graph illustrating astigmatism of the lens assembly 400 of FIG. 5 according to an embodiment of the disclosure. FIG. 8 is a graph illustrating distortion rates of the lens assembly 400 of FIG. 5 according to an embodiment of the disclosure.

FIG. 6 is a graph illustrating the spherical aberration of the lens assembly 400 according to an embodiment of the disclosure, in which a horizontal axis represents coefficients of longitudinal spherical aberration, a vertical axis represents normalized distances from an optical axis, and variations of the longitudinal spherical aberration according to light wavelengths are illustrated. The longitudinal spherical aberration is shown, for example, for each of light having a wavelength of 656.3000 nanometers (NM) (e.g., red), light having a wavelength of 587.6000NM (e.g., yellow), light having a wavelength of 546.1000NM, light having a wavelength of 486.1000NM (e.g., blue), and light having a wavelength of 435.8000NM. FIG. 7 is a graph illustrating the astigmatism of the lens assembly 400 according to an embodiment of the disclosure, for light having the wavelength of 546.1000NM, in which 'S' denotes a sagittal plane and 'T' denotes a tangential plane. FIG. 8 is a graph illustrating the distortion rates of the lens assembly 400 according to an embodiment of the disclosure, for light having the wavelength of 546.1000NM.

Referring to FIGS. 5 to 8, the lens assembly 400 (e.g., the lens assembly 210 of FIG. 2) according to one of various embodiments of the disclosure may include an image sensor I or 230 and seven lenses L1, L2, L3, L4, L5, L6, and L7. In an embodiment, the seven lenses L1, L2, L3, L4, L5, L6, and L7 may include a first lens L1, a second lens L2, a third lens L3, a fourth lens L4, a fifth lens L5, a sixth lens L6, and/or a seventh lens L7 sequentially aligned along a direction of an optical axis O toward the image sensor I or 230. In the detailed following description, the first lens L1 may be referred to as the "first object-side lens" and the seventh lens L7 may be referred to as the "first sensor-side lens". In an embodiment, "aligned along the direction of the optical axis O" may mean alignment such that the optical axes of the respective lenses L1, L2, L3, L4, L5, L6, and L7 or the optical axis of the image sensor I or 230 (e.g., an imaging plane img) coincides. The imaging plane img may receive or detect light aligned or focused by, for example, the lenses L1, L2, L3, L4, L5, L6, and L7.

According to an embodiment, an optical component such as an aperture (e.g., implemented on a lens surface labeled with 'sto' in the lens assembly 400 of FIG. 5) or an IR cut filter F may be disposed between the first lens L1 and the image sensor I or 230. For example, the aperture (e.g., "stop") may be disposed between the first lens L1 and the seventh lens L7, for example, between any two adjacent lenses selected from among the seven lenses L1, L2, L3, L4, L5, L6, and L7. When it is said that "the aperture is disposed between any two selected adjacent lenses", this may be understood to include a configuration in which the aperture is disposed on one of two lens surfaces of the two adjacent lenses, which face each other. In an embodiment, the IR cut filter F may suppress or block light (e.g., IR light) of a wavelength which is invisible to the user's naked eye but detected by a photosensitive material of a film or the image sensor I or 230 from being incident on the image sensor I or 230. The IR cut filter F may be disposed between the seventh lens L7 and the image sensor I or 230. Depending on the purpose of the lens assembly 400, the IR cut filter F may be replaced with a band pass filter that transmits IR light and suppresses or blocks visible light.

According to an embodiment, the IR cut filter F and/or the image sensor I or 230 may be described as a component separate from the lens assembly 400. For example, the IR cut filter F and/or the image sensor I or 230 may be mounted on an electronic device (e.g., the electronic device 101, 102, 104, or 300 of FIG. 1 or FIG. 4) or an optical device (e.g., the camera module 180 or 280 of FIG. 1 or FIG. 2), and the plurality of lenses L1, L2, L3, L4, L5, L6, and L7 forming the lens assembly 400 may be mounted on the electronic device or the optical device, in alignment with the IR cut filter F and/or the image sensor I or 230 on the optical axis O. In an embodiment, at least one of the lenses L1, L2, L3, L4, L5, L6, and L7 may reciprocate along the direction of the optical axis O, and the electronic device (e.g., the electronic device 101, 102, 104, or 300 of FIG. 1 or FIG. 4 or the processor 120 of FIG. 1) may perform focus adjustment or focal length adjustment by reciprocating the at least one of the lenses L1, L2, L3, L4, L5, L6, and L7. In an embodiment, the lens assembly 400 may be disposed as one of the camera modules 305, 312, and 313 of FIG. 3 or FIG. 4.

According to an embodiment, each of the lenses L1, L2, L3, L4, L5, L6, and L7 may include an object-side surface and a sensor-side surface. For example, reference number 'S1' in FIG. 5 may denote the object-side surface of the first lens L1, and 'S11' may denote the sensor-side surface of the fifth lens L5. Although not shown in FIG. 5 illustrating the layout of the lenses L1, L2, L3, L4, L5, L6, and L7, a lens surface 'S7' described in [Table 1] below may be a reference position, such as a structure referenced for the arrangement of the lenses L1, L2, L3, L4, L5, L6, and L7. In describing various embodiments below, reference numbers in the drawings may be omitted for some of the object-side surfaces and sensor-side surfaces of the lenses L1, L2, L3, L4, L5, L6, and L7, for simplicity of the drawings. The reference numbers omitted for the lens surfaces in the drawings may be easily understood through [Tables] described below regarding lens data of each embodiment.

In the following detailed description, the shapes of the object-side surfaces or sensor-side surfaces of the lenses L1, L2, L3, L4, L5, L6, and L7 may be described with the term 'concave' or 'convex'. Such references to the shapes of the lens surfaces may describe the shape of a point intersecting with the optical axis O or a paraxial region intersecting with the optical axis O. When it is said that an 'object-side surface is concave', this may describe a shape in which the center of the radius of curvature of the object-side surface is located closer to an object OB. When it is said that an 'object-side surface is convex', this may describe a shape in which the center of the radius of curvature of the object-side surface is located closer to the image sensor I. When it is said that a 'sensor-side surface is concave', this may describe a shape in which the center of the radius of curvature of the sensor-side surface is located closer to the image sensor I. When it is said that a 'sensor-side surface is convex', this may describe a shape in which the center of the radius of curvature of the sensor-side surface is located closer to the object OB. For example, in FIG. 5, the object-side surface S1 of the first lens L1 may be understood as convex, and a sensor-side surface S4 of the second lens L2 may be understood as concave.

According to an embodiment, the first lens L1 may have a positive refractive power and include the convex object-side surface S1 and/or a concave sensor-side surface S2. Since the object-side surface S1 of the first lens L1 has a convex shape, the lens assembly 400 may be made large in diameter, while enabling easy spherical aberration control. In an embodiment, the first lens L1 may have a meniscus shape convex toward the object OB, together with the second lens L2 and/or the third lens L3. The shape of the first lens L1, the second lens L2 and/or the third lens L3 may facilitate reduction of the size of the lens assembly 400 (e.g., a "total lens length" defined as the distance from the object-side surface S1 of the first lens L1 to the image sensor I or 230).

According to an embodiment, the second lens L2 may have a negative refractive power and be made of a material having a high dispersion value (e.g., a material having a small Abbe number), so that chromatic aberration that may occur in the first lens L1 may be easily corrected. In order to facilitate correction of chromatic aberration, the second lens L2 may be made of a material having a refractive index of approximately 1.6 or more and approximately 1.7 or less. In an embodiment, the second lens L2 may implement a negative refractive power in combination with the third lens L3, thereby facilitating correction of coma aberration or field curvature. In an embodiment, when the aperture is disposed between the second lens L2 and the third lens L3, the lens assembly 400 may be miniaturized, making it easy to secure an amount of peripheral light. In FIG. 5, the aperture may be implemented on the object-side surface S5 of the third lens L3, and when the aperture is disposed on the lens surface, 'sto' may be added to a reference numeral denoting the lens surface. In an embodiment, when the aperture is disposed between the second lens L2 and the third lens L3, it may be effective in cutting incident light, and facilitate control of spherical aberration or coma aberration.

According to an embodiment, the third lens L3 may have a positive refractive power and be a meniscus lens convex toward the object OB, together with the first lens L1 and/or the second lens L3. As described above, when at least one or all of the first lens L1, the second lens L2, and/or the third lens L3 are meniscus lenses convex toward the object OB, miniaturization of the lens assembly 400 may be facilitated.

According to an embodiment, the fourth lens L4 may have a negative refractive power and be a meniscus lens convex toward the image sensor I. For example, an object-side surface S8 of the fourth lens L4 may be concave, and a sensor-side surface S9 of the fourth lens L4 may be convex. The fourth lens L2 may be made of a material having a refractive index of, for example, approximately 1.6 or more and approximately 1.7 or less, thereby facilitating chromatic aberration correction. In an embodiment, the fourth lens L4 may include an inflection point on at least one of the object-side surface S8 or the sensor-side surface S9. It is to be noted that the inflection points are marked with symbol '♦' and labeled with no reference numerals in FIG. 5. Since the fourth lens L4 has a meniscus shape and/or includes an inflection point, aberration correction may be facilitated in a peripheral region around a paraxial region.

According to an embodiment, the fifth lens L5 may be an aspherical lens having a positive refractive power. Since the fifth lens L5 is implemented as an aspherical lens, coma aberration control in a peripheral region may be facilitated. The fifth lens L5 may include an inflection point on at least one of an object-side surface S10 or the sensor-side surface S11, for example, and the object-side surface S10 may be convex and the sensor-side surface S11 may be concave. The shape of the fifth lens L5 may facilitate control of various aberrations and increase a light amount ratio of a peripheral region. In an embodiment, in order to facilitate correction of chromatic aberration, the fifth lens L5 may be made of a material having a refractive index of approximately 1.6 or more and approximately 1.7 or less.

According to an embodiment, the sixth lens L6 may have a positive refractive power and include a convex object-side surface S12. The sixth lens L6 may include an inflection point, for example, on at least one of the object-side surface S12 or a sensor-side surface S13. In an embodiment, the sixth lens L6 may secure an amount of light in a peripheral region by lowering the incident angle of light incident on the imaging plane img. For example, the refractive power or shape of the sixth lens L6 may create an environment in which a good amount of light may be secured from a paraxial region to a peripheral region in a large-diameter optical system.

According to an embodiment, the seventh lens L7 may have a negative refractive power, and an object-side surface S14 and/or a sensor-side surface S15 of the seventh lens L7 may be implemented as an aspherical surface. In an embodiment, at least one of the object-side surface S14 or the sensor-side surface S15 of the seventh lens L7 may include an inflection point. For example, as the sensor-side surface S15 of the seventh lens L7 includes one or more inflection points, field curvature from a paraxial region to a peripheral region may be suppressed. In an embodiment, each of the object-side surface S14 and the sensor-side surface S15 of the seventh lens L7 may be concave in the paraxial region and convex in the peripheral region. In an embodiment, the peripheral region of the seventh lens L7 may have a shape that gets closer to the sixth lens L6 as it gets farther from the optical axis O. For example, the peripheral region may have a shape in which the object-side surface S14 and the sensor-side surface S15 are convex and an edge is inclined in a direction closer to the sixth lens L6. This shape of the seventh lens L7 may facilitate reduction of the effective diameter of the seventh lens L7. For example, the seventh lens L7 may have a shape that leads to miniaturization of the lens assembly 400.

According to an embodiment, as the first lens L1, the second lens L2, and/or the third lens L3 has a meniscus shape convex toward the object OB, the lens assembly 400 may be miniaturized. In an embodiment, when each of the fourth lens L4, the fifth lens L5, the sixth lens L6, and/or the seventh lens L7 includes an inflection point on at least one of the object-side surface or the sensor-side surface, various aberrations may be easily corrected in the peripheral region around the paraxial region. In an embodiment, in order to facilitate chromatic aberration correction, at least one of the second lens L2, the fourth lens L4, and/or the fifth lens L5 may be made of a material having a refractive index of approximately 1.6 or more.

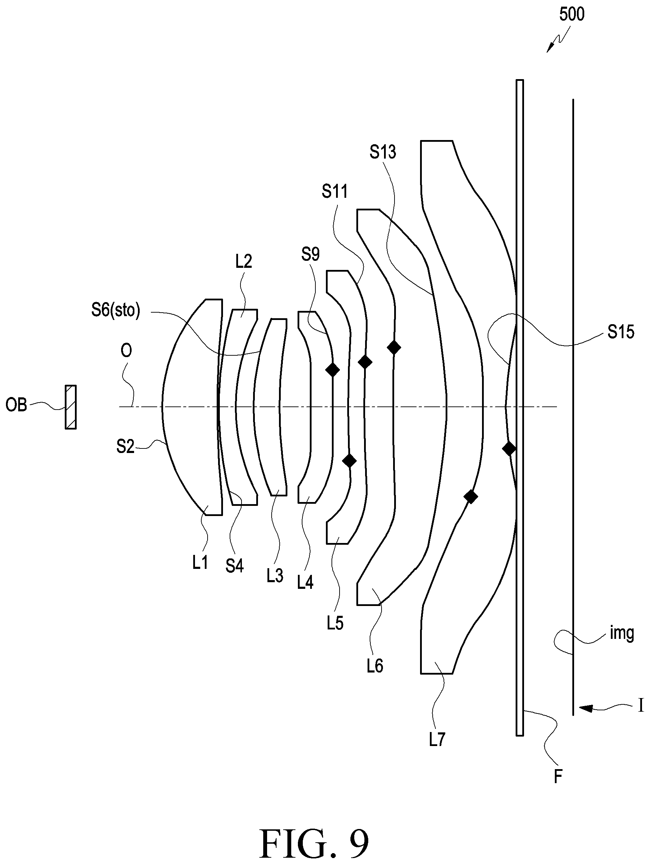

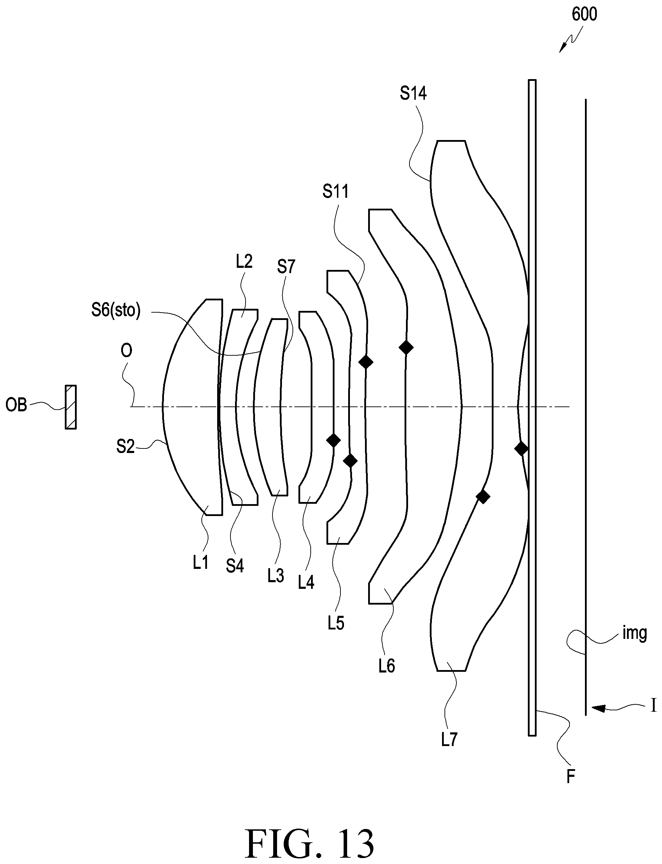

In describing conditions presented by [Equations] below, the distance between two selected lens surfaces, the distance between one selected lens surface and the aperture, and/or the distance between one selected lens surface and the image sensor I (e.g., the imaging plane img), and the total lens length may be mentioned. Unless otherwise specified, these distances or lengths may be understood as distances measured from the optical axis O. Depending on embodiments, different reference numerals may be used for the lens surfaces, and although reference numerals are omitted for lens surfaces of a lens assembly 500 or 600 of FIG. 9 or FIG. 13 in the drawings, those skilled in the art will easily understand the reference numerals of the lens surfaces by referring to [Table 6] and/or [Table 11] regarding lens data.

According to an embodiment, the lens assembly 400 may satisfy the condition presented by the following [Equation 1].

[Equation 1]

$$1 \leq f/f1 \leq 2$$

In [Equation 1], 'f' may be the effective focal length of the lens assembly 400, and 'f1' may be the focal length of the first lens L1. In an embodiment, when a value calculated by [Equation 1] is greater than 2, the refractive power of the first lens L1 may increase, making it difficult to correct aberration (e.g., spherical aberration), and when the value calculated by [Equation 1] is less than 1, miniaturization of the lens assembly 400 may be difficult. For example, when the condition of [Equation 1] is satisfied, miniaturization of the lens assembly 400 and aberration correction may be facilitated, thereby stabilizing the optical performance of the lens assembly 400.

According to an embodiment, the lens assembly 400 may satisfy the condition presented by the following [Equation 2].

[Equation 2]

$$1.3 \leq Fno \leq 1.7$$

In [Equation 2], 'Fno' may be the F number of the lens assembly 400. When the F number of the lens assembly 400 is greater than 1.7, a deflection limit may be lowered, and when the F number is less than 1.3, it may be brighter, but an additional lens may be required to secure optical performance. For example, when the F number of the lens assembly 400 is less than 1.3, it may be difficult to miniaturize the lens assembly 400. For example, [Equation 2] may present a condition for securing good optical performance while miniaturizing the lens assembly 400.

According to an embodiment, the lens assembly 400 may satisfy the condition presented by the following [Equation 3].

[Equation 3]

$$0.59 \leq TTL/(ImgH*2) \leq 0.68$$

In [Equation 3], 'TTL' may be the distance from the object-side surface S1 of the first lens L1 to the image sensor I (e.g., the image plane img), and 'ImgH' may be a maximum distance from the optical axis O to an edge of the image sensor I (e.g., the image plane img). For example, 'ImgH*2' may be understood as the total diagonal length of the image plane img. In an embodiment, [Equation 3] regarding a ratio of the size ImgH of the image sensor I to the total lens length TTL may be referred to as a slim factor. In an embodiment, when the slim factor is greater than 0.68, it may be difficult to miniaturize the lens assembly 400, and when the slim factor is smaller than 0.59, it may be difficult to secure an angle of view and to secure the processing or arrangement space of the lenses L1, L2, L3, L4, L5, L6, and L7. In an embodiment, when the total lens length decreases due to a smaller slim factor, it may be difficult to secure modulation transfer function (MTF) performance or control aberration. For example, [Equation 3] may present a condition for securing mass production when the lens assembly is mounted on a miniaturized electronic device (e.g., the electronic devices 101, 102, 104, and 300 of FIGS. 1 to 4).

According to an embodiment, the lens assembly 400 may satisfy the condition presented by the following [Equation 4].

[Equation 4]

$$0.1 \leq T1/TA \leq 0.3$$

In [Equation 4], 'T1' may be the distance from the object-side surface S1 of the first lens L1 to the aperture (e.g., the object-side surface S5 of the third lens L3), and 'TA' may be the distance from the object-side surface S1 of the first lens L1 to the sensor-side surface S15 of the seventh lens L7. For example, [Equation 4], which describes a condition regarding the position of the aperture among the lenses L1, L2, L3, L4, L5, L6, and L7, may present a condition for securing a good amount of peripheral light while miniaturizing the lens assembly 400. In an embodiment, the aperture may be disposed between the second lens L2 and the third lens L3, and in the lens assembly 400 of FIG. 5, a configuration in which the aperture is disposed on the object-side surface S5 of the third lens L3 may be exemplified.

In an embodiment, when a value calculated by [Equation 4] is less than 0.1, the miniaturization is easy, but it may be difficult to optimize control of various aberrations or MTF performance. In an embodiment, when the value calculated by [Equation 4] is less than 0.1, acquisition of upper light in a peripheral region may be limited, making it difficult to secure an amount of peripheral light. In an embodiment, when the value calculated by [Equation 4] is greater than 0.3, the aperture may be disposed close to the image sensor I, thereby increasing the total lens length and limiting acquisition of lower light in the peripheral region.

According to an embodiment, the lens assembly 400 may satisfy the condition presented by the following [Equation 5].

[Equation 5]

$$-50 \leq f23 < 0$$

In [Equation 5], 'f23' may be a focal length realized by combining the second lens L2 with the third lens L3. It has been described above that the negative refractive power is implemented by combining the second lens L2 with the third lens L3. The lens assembly 400 may achieve a balance in the overall refractive power and have good optical performance while being miniaturized, by satisfying the condition of [Equation 5]. For example, when a value calculated by [Equation 5] is greater than 0, the positive refractive power of the lens assembly 400 may increase, making it difficult to correct aberration (e.g., coma aberration). In an embodiment, when the value calculated by [Equation 5] is smaller than -50, the overall refractive power of the lens assembly 400 may decrease, making it difficult to miniaturize the lens assembly 400.

According to an embodiment, the lens assembly 400 may satisfy the condition presented by the following [Equation 6].

[Equation 6]

$$17 \leq vd\text{-}\min \leq 25$$

In [Equation 6], 'vd-min' may represent the minimum of the Abbe numbers of the lenses L1, L2, L3, L4, L5, L6, and L7. In an embodiment, the lens assembly 400 may facilitate chromatic aberration correction and have stable optical performance by satisfying the condition of [Equation 6].

According to an embodiment, the lens assembly 400 may have a focal length of approximately 5.25mm, an F-number of approximately 1.58, and/or an angle of view of approximately 83 degrees. In an embodiment, the lens assembly 400 may satisfy at least some of the shapes and refractive powers of the lens(es) L1, L2, L3, L4, L5, L6, and L7 (e.g., the lens surface(s)) described above, and/or the conditions presented by [Equations], and may be manufactured to exemplary specifications described in [Table 1] below.

[Table 1]

| Lens surface (Surf) | Radius of curvature (Radius) | Thickness (Thick) | Refractive index (nd) | Abbe number (vd) |
|---|---|---|---|---|
| obj | infinity | 1000 | | |
| 1 | 2.106 | 0.926 | 1.54401 | 55.91 |
| 2 | 10.064 | 0.036 | | |
| 3 | 5.845 | 0.26 | 1.67073 | 19.23 |
| 4 | 3.245 | 0.219 | | |
| sto | 7.114 | 0.358 | 1.535 | 55.75 |
| 6 | 13.845 | 0.08 | | |
| 7 | infinity | 0.26 | | |
| 8 | -63.134 | 0.338 | 1.67073 | 19.23 |
| 9 | 32.965 | 0.244 | | |
| 10 | 4.163 | 0.249 | 1.63914 | 23.51 |
| 11 | 4.719 | 0.465 | | |
| 12 | 9.926 | 1.008 | 1.535 | 55.75 |
| 13 | -2.582 | 0.289 | | |

(continued)

| Lens surface (Surf) | Radius of curvature (Radius) | Thickness (Thick) | Refractive index (nd) | Abbe number (vd) |
|---|---|---|---|---|
| 14 | -4.75 | 0.451 | 1.54401 | 55.91 |
| 15 | 2.231 | 0.167 | | |
| 16 | infinity | 0.11 | 1.5168 | 64.2 |
| 17 | infinity | 0.77 | | |
| img | infinity | 0.025 | | |

[Table 2], [Table 3], [Table 4] and [Table 5] below list the aspheric coefficients of the lenses L1, L2 , L3, L4, L5, L6, and L7, and the definition of an aspherical surface may be derived from the following [Equation 7].

[Equation 7]

$$x = \frac{y^2/R}{1+\sqrt{(1-(1+K)(y/R^2))}} + \sum_i (A_i)(y^i)$$

In [Equation 7], "x" is the distance from a point on a lens surface through which the optical axis O passes, in the direction of the optical axis O, "y" is a distance from the optical axis O in a direction perpendicular to the optical axis O, "R" is the radius of curvature at the point on the lens surface through which the optical axis O passes, "K" is a conic constant, and "Ai" is an aspheric coefficient.

[Table 2]

| Lens surface (Surf) | 1_ASP | 2_ASP | 3_ASP | 4_ASP |
|---|---|---|---|---|
| Radius | 2.10609E+00 | 1.00643E+01 | 5.84474E+00 | 3.24483E+00 |
| K(Conic) | -1.38736E+00 | 9.15267E-01 | -5.86335E-01 | 2.30636E+00 |
| A(4th)/C4 | 7.42252E-03 | -4.04295E-02 | -4.39571E-02 | -6.62364E-03 |
| B(6th)/C5 | 7.44575E-02 | 8.90122E-02 | 5.73110E-02 | -2.17435E-01 |
| C(8th)/C6 | -3.22380E-01 | -1.81843E-01 | -2.92980E-02 | 1.66276E+00 |
| D(10th)/C7 | 8.86448E-01 | 4.02362E-01 | -2.06794E-02 | -7.46608E+00 |
| E(12th)/C8 | -1.63239E+00 | -8.23426E-01 | 4.76434E-02 | 2.25408E+01 |
| F(14th)/C9 | 2.10093E+00 | 1.31837E+00 | -3.65737E-02 | -4.79329E+01 |
| G(16th)/C10 | -1.94081E+00 | -1.55522E+00 | 1.49825E-02 | 7.34314E+01 |
| H(18th)/C11 | 1.30458E+00 | 1.33087E+00 | -3.26975E-03 | -8.18525E+01 |
| J(20th)/C 12 | -6.39429E-01 | -8.19910E-01 | 2.99163E-04 | 6.63581E+01 |
| K(22th)/C13 | 2.26210E-01 | 3.58907E-01 | 0.00000E+00 | -3.86654E+01 |
| L(24th)/C14 | -5.62564E-02 | -1.08696E-01 | 0.00000E+00 | 1.57556E+01 |
| M(26th)/C15 | 9.32983E-03 | 2.16232E-02 | 0.00000E+00 | -4.25701E+00 |
| N(28th)/C16 | -9.26252E-04 | -2.53960E-03 | 0.00000E+00 | 6.84448E-01 |
| O(30th)/C17 | 4.16295E-05 | 1.33359E-04 | 0.00000E+00 | -4.95208E-02 |

[Table 3]

| Lens surface (Surf) | 5_ASP | 6_ASP | 8_ASP | 9_ASP |
|---|---|---|---|---|
| Radius | 7.11355E+00 | 1.38445E+01 | -6.31344E+01 | 3.29653E+01 |
| K(Conic) | -2.36615E+01 | -9.90000E+01 | -2.63298E+01 | 9.69973E+01 |
| A(4th)/C4 | 1.71198E-02 | -2.14417E-02 | -5.63683E-02 | -6.37734E-02 |

(continued)

| Lens surface (Surf) | 5_ASP | 6_ASP | 8_ASP | 9_ASP |
|---|---|---|---|---|
| B(6th)/C5 | -1.74175E-01 | 2.07481E-01 | -4.22973E-02 | -1.25075E-01 |
| C(8th)/C6 | 1.33228E+00 | -1.38320E+00 | 6.15590E-01 | 9.87494E-01 |
| D(10th)/C7 | -6.45664E+00 | 5.46827E+00 | -3.62094E+00 | -3.82610E+00 |
| E(12th)/C8 | 2.10907E+01 | -1.37565E+01 | 1.23713E+01 | 9.61554E+00 |
| F(14th)/C9 | -4.82595E+01 | 2.21264E+01 | -2.78262E+01 | -1.70646E+01 |
| G(16th)/C10 | 7.91380E+01 | -2.06686E+01 | 4.28681E+01 | 2.20616E+01 |
| H(18th)/C11 | -9.39884E+01 | 5.05778E+00 | -4.55245E+01 | -2.09989E+01 |
| J(20th)/C12 | 8.08404E+01 | 1.37861E+01 | 3.25978E+01 | 1.46814E+01 |
| K(22th)/C13 | -4.97753E+01 | -2.08456E+01 | -1.46754E+01 | -7.43245E+00 |
| L(24th)/C14 | 2.13538E+01 | 1.49072E+01 | 3.29532E+00 | 2.64512E+00 |
| M(26th)/C15 | -6.05412E+00 | -6.15208E+00 | 1.46422E-01 | -6.26401E-01 |
| N(28th)/C16 | 1.01847E+00 | 1.40725E+00 | -2.52069E-01 | 8.84875E-02 |
| O(30th)/C17 | -7.69171E-02 | -1.38823E-01 | 4.02553E-02 | -5.63494E-03 |

[Table 4]

| Lens surface (Surf) | 10_ASP | 11-ASP | 12_ASP |
|---|---|---|---|
| Radius | 4.16282E+00 | 4.71850E+00 | 9.92622E+00 |
| K(Conic) | -3.71342E+01 | 8.54481E-01 | 1.34879E+01 |
| A(4th)/C4 | -7.31655E-02 | -1.07012E-01 | 1.02289E-04 |
| B(6th)/C5 | 1.19196E-01 | 4.02150E-02 | -3.11501E-02 |
| C(8th)/C6 | -4.59544E-01 | 2.27674E-02 | 3.04752E-02 |
| D(10th)/C7 | 1.43226E+00 | -9.24617E-02 | -2.81976E-02 |
| E(12th)/C8 | -3.01639E+00 | 1.58042E-01 | 1.86916E-02 |
| F(14th)/C9 | 4.39610E+00 | -1.78768E-01 | -8.32492E-03 |
| G(16th)/C10 | -4.56129E+00 | 1.39116E-01 | 2.40294E-03 |
| H(18th)/C11 | 3.41236E+00 | -7.59358E-02 | -4.10923E-04 |
| J(20th)/C12 | -1.84139E+00 | 2.93658E-02 | 2.91008E-05 |
| K(22th)/C13 | 7.08495E-01 | -8.01598E-03 | 2.35687E-06 |
| L(24th)/C14 | -1.89146E-01 | 1.51094E-03 | -5.68154E-07 |
| M(26th)/C15 | 3.32215E-02 | -1.87068E-04 | 1.98396E-08 |
| N(28th)/C16 | -3.44525E-03 | 1.36795E-05 | 2.41427E-09 |
| O(30th)/C17 | 1.59539E-04 | -4.47330E-07 | -1.64198E-10 |

[Table 5]

| Lens surface (Surf) | 13_ASP | 14_ASP | 15_ASP |
|---|---|---|---|
| Radius | -2.58243E+00 | -4.74957E+00 | 2.23103E+00 |
| K(Conic) | -3.85250E-01 | -4.11412E+00 | -9.36900E+00 |
| A(4th)/C4 | 1.18819E-01 | -3.47978E-02 | -6.55803E-02 |
| B(6th)/C5 | -7.23765E-02 | 5.49097E-03 | 3.62260E-02 |
| C(8th)/C6 | 4.60450E-02 | 7.35115E-04 | -1.78952E-02 |

(continued)

| Lens surface (Surf) | 13_ASP | 14_ASP | 15_ASP |
|---|---|---|---|
| D(10th)/C7 | -3.09589E-02 | -6.41727E-04 | 6.78924E-03 |
| E(12th)/C8 | 1.79426E-02 | 2.73997E-04 | -1.91876E-03 |
| F(14th)/C9 | -8.24559E-03 | -8.20229E-05 | 4.01628E-04 |
| G(16th)/C10 | 2.92262E-03 | 1.71049E-05 | -6.22063E-05 |
| H(18th)/C11 | -7.85849E-04 | -2.50801E-06 | 7.11475E-06 |
| J(20th)/C12 | 1.57531E-04 | 2.60437E-07 | -5.96762E-07 |
| K(22th)/C13 | -2.30036E-05 | -1.90530E-08 | 3.61430E-08 |
| L(24th)/C14 | 2.36338E-06 | 9.60041E-10 | -1.53452E-09 |
| M(26th)/C15 | -1.61212E-07 | -3.17012E-11 | 4.32396E-11 |
| N(28th)/C16 | 6.53336E-09 | 6.17326E-13 | -7.25015E-13 |
| O(30th)/C17 | -1.18756E-10 | -5.37281E-15 | 5.46723E-15 |

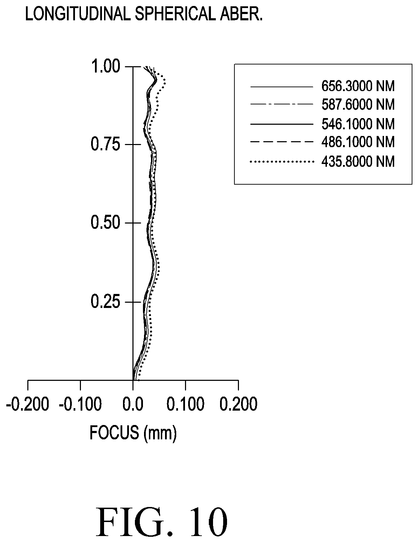

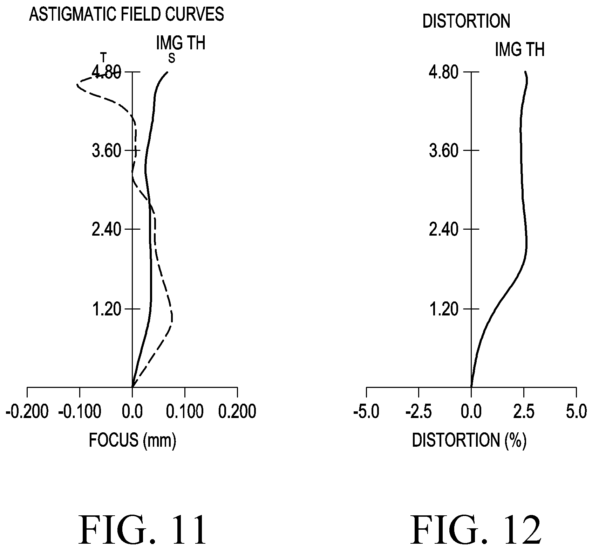

FIG. 9 is a diagram illustrating a lens assembly 500 according to an embodiment of the disclosure. FIG. 10 is a graph illustrating spherical aberration of the lens assembly 500 of FIG. 9 according to an embodiment of the disclosure. FIG. 11 is a graph illustrating astigmatism of the lens assembly 500 of FIG. 9 according to an embodiment of the disclosure. FIG. 12 is a graph illustrating distortion rates of the lens assembly 500 of FIG. 9 according to an embodiment of the disclosure.

The lens assembly 500 of FIG. 9 may have a focal length of approximately 5.20mm, an F-number of approximately 1.58, and/or an angle of view of approximately 83 degrees. In an embodiment, the lens assembly 500 may satisfy at least some of the shapes and refractive powers of the lens(es) L1, L2, L3, L4, L5, L6, and L7 (e.g., the lens surface(s)) described above, and/or the conditions presented by [Equations], be manufactured to exemplary specifications described in [Table 6] below, and have aspheric coefficients listed in [Table 7], [Table 8], [Table 9], and [Table 10].

[Table 6]

| Lens surface (Surf) | Radius of curvature (Radius) | Thickness (Thick) | Refractive index (nd) | Abbe number (vd) |
|---|---|---|---|---|
| obj | infinity | 1000 | | |
| 1 | infinity | 0.3 | | |
| 2 | 2.223 | 0.845 | 1.54401 | 55.91 |
| 3 | 14.381 | 0.05 | | |
| 4 | 5.518 | 0.21 | 1.67073 | 19.23 |
| 5 | 2.95 | 0.228 | | |
| sto | 5.144 | 0.38 | 1.54401 | 55.91 |
| 7 | 10.421 | 0.433 | | |
| 8 | -20.022 | 0.301 | 1.67073 | 19.23 |
| 9 | 30.425 | 0.2 | | |
| 10 | 3.375 | 0.307 | 1.63914 | 23.51 |
| 11 | 3.799 | 0.477 | | |
| 12 | 7.746 | 0.88 | 1.54401 | 55.91 |
| 13 | -3.623 | 0.451 | | |
| 14 | -163.677 | 0.4 | 1.54401 | 55.91 |
| 15 | 1.862 | 0.188 | | |
| 16 | infinity | 0.11 | 1.5168 | 64.2 |
| 17 | infinity | 0.76 | | |

(continued)

| Lens surface (Surf) | Radius of curvature (Radius) | Thickness (Thick) | Refractive index (nd) | Abbe number (vd) |
|---|---|---|---|---|
| img | infinity | 0.03 | | |

[Table 7]

| Lens surface (Surf) | 2_ASP | 3_ASP | 4_ASP | 5_ASP |
|---|---|---|---|---|
| Radius | 2.22277E+00 | 1.43814E+01 | 5.51846E+00 | 2.95043E+00 |
| K(Conic) | -1.47369E+00 | 8.66457E-02 | -2.41773E-01 | 6.95140E-02 |
| A(4th)/C4 | -3.45330E-03 | 1.03448E-02 | -3.06571E-02 | -4.16084E-02 |
| B(6th)/C5 | 1.61241E-01 | 1.83124E-02 | 4.01064E-02 | -9.36406E-02 |
| C(8th)/C6 | -7.74534E-01 | -2.87848E-01 | -3.09433E-01 | 1.17425E+00 |
| D(10th)/C7 | 2.35946E+00 | 1.33368E+00 | 1.53360E+00 | -6.40467E+00 |
| E(12th)/C8 | -4.79579E+00 | -3.50818E+00 | -4.55316E+00 | 2.10417E+01 |
| F(14th)/C9 | 6.75613E+00 | 5.96175E+00 | 8.78477E+00 | -4.57985E+01 |
| G(16th)/C10 | -6.76467E+00 | -6.92651E+00 | -1.15646E+01 | 6.92114E+01 |
| H(18th)/C11 | 4.88040E+00 | 5.65754E+00 | 1.06717E+01 | -7.43396E+01 |
| J(20th)/C12 | -2.54392E+00 | -3.28289E+00 | -6.97843E+00 | 5.71806E+01 |
| K(22th)/C13 | 9.49057E-01 | 1.34706E+00 | 3.22068E+00 | -3.12813E+01 |
| L(24th)/C14 | -2.47024E-01 | -3.82231E-01 | -1.02648E+00 | 1.18819E+01 |
| M(26th)/C15 | 4.25908E-02 | 7.13740E-02 | 2.15084E-01 | -2.97802E+00 |
| N(28th)/C16 | -4.37016E-03 | -7.89287E-03 | -2.66724E-02 | 4.42751E-01 |
| O(30th)/C17 | 2.01973E-04 | 3.91710E-04 | 1.48376E-03 | -2.95647E-02 |

[Table 8]

| Lens surface (Surf) | 6_ASP | 7_ASP | 8_ASP | 9_ASP |
|---|---|---|---|---|
| Radius | 5.14448E+00 | 1.04212E+01 | -2.00223E+01 | 3.04248E+01 |
| K(Conic) | 3.05388E+00 | -1.00000E+00 | 0.00000E+00 | 0.00000E+00 |
| A(4th)/C4 | 4.79651E-03 | 5.27619E-04 | -6.32862E-02 | -1.33023E-01 |
| B(6th)/C5 | -1.42512E-02 | -7.49128E-02 | 1.44349E-02 | 2.75909E-01 |
| C(8th)/C6 | 2.96376E-02 | 1.52965E+00 | 1.15632E-01 | -9.31016E-01 |
| D(10th)/C7 | -3.76977E-02 | -1.19538E+01 | -6.50893E-01 | 2.51965E+00 |
| E(12th)/C8 | 2.78501E-02 | 5.35770E+01 | 1.48530E+00 | -4.87605E+00 |
| F(14th)/C9 | -8.79198E-03 | -1.54826E+02 | -1.96568E+00 | 6.50131E+00 |
| G(16th)/C10 | 1.04178E-03 | 3.05108E+02 | 1.60889E+00 | -5.96156E+00 |
| H(18th)/C11 | 0.00000E+00 | -4.21925E+02 | -8.04630E-01 | 3.74475E+00 |
| J(20th)/C12 | 0.00000E+00 | 4.13966E+02 | 2.26072E-01 | -1.57987E+00 |
| K(22th)/C13 | 0.00000E+00 | -2.86927E+02 | -2.74074E-02 | 4.26950E-01 |
| L(24th)/C14 | 0.00000E+00 | 1.37420E+02 | 0.00000E+00 | -6.65960E-02 |
| M(26th)/C15 | 0.00000E+00 | -4.32837E+01 | 0.00000E+00 | 4.54572E-03 |
| N(28th)/C16 | 0.00000E+00 | 8.06933E+00 | 0.00000E+00 | 0.00000E+00 |
| O(30th)/C17 | 0.00000E+00 | -6.74794E-01 | 0.00000E+00 | 0.00000E+00 |

[Table 9]

| Lens surface (Surf) | 10_ASP | 11-ASP | 12_ASP |
|---|---|---|---|
| Radius | 3.37548E+00 | 3.79855E+00 | 7.74569E+00 |
| K(Conic) | -2.55857E+01 | -2.33467E+01 | 5.36309E+00 |
| A(4th)/C4 | -7.60808E-02 | -5.88609E-02 | -3.92839E-03 |
| B(6th)/C5 | -2.34181E-03 | -1.29881E-03 | 1.71100E-02 |
| C(8th)/C6 | 3.79668E-01 | 8.35688E-02 | -8.21206E-02 |
| D(10th)/C7 | -1.40528E+00 | -1.74376E-01 | 1.27341E-01 |
| E(12th)/C8 | 3.05289E+00 | 2.49972E-01 | -1.22958E-01 |
| F(14th)/C9 | -4.45839E+00 | -2.59613E-01 | 8.13987E-02 |
| G(16th)/C10 | 4.56392E+00 | 1.91057E-01 | -3.79150E-02 |
| H(18th)/C11 | -3.34663E+00 | -9.95599E-02 | 1.25180E-02 |
| J(20th)/C12 | 1.77177E+00 | 3.68756E-02 | -2.92833E-03 |
| K(22th)/C13 | -6.73079E-01 | -9.65743E-03 | 4.80979E-04 |
| L(24th)/C14 | 1.79197E-01 | 1.74956E-03 | -5.41851E-05 |
| M(26th)/C15 | -3.17751E-02 | -2.08679E-04 | 3.98548E-06 |
| N(28th)/C16 | 3.37202E-03 | 1.47448E-05 | -1.72373E-07 |
| O(30th)/C17 | -1.62010E-04 | -4.67526E-07 | 3.32477E-09 |

[Table 10]

| Lens surface (Surf) | 13_ASP | 14_ASP | 15_ASP |
|---|---|---|---|
| Radius | -3.62277E+00 | -1.63677E+02 | 1.86248E+00 |
| K(Conic) | -1.86555E+00 | 1.89124E+03 | -8.68703E+00 |
| A(4th)/C4 | 7.52955E-02 | -1.30127E-01 | -7.16804E-02 |
| B(6th)/C5 | -3.39670E-02 | 8.70387E-02 | 3.89116E-02 |
| C(8th)/C6 | 1.57880E-02 | -4.11194E-02 | -1.66936E-02 |
| D(10th)/C7 | -1.51802E-02 | 4.31916E-03 | 4.35489E-03 |
| E(12th)/C8 | 1.06511E-02 | 5.93781E-03 | -5.75955E-04 |
| F(14th)/C9 | -4.22388E-03 | -3.45133E-03 | -2.26778E-06 |
| G(16th)/C10 | 9.48157E-04 | 9.57870E-04 | 1.42798E-05 |
| H(18th)/C11 | -1.01521E-04 | -1.65190E-04 | -2.48125E-06 |
| J(20th)/C12 | -3.62719E-06 | 1.90847E-05 | 2.09509E-07 |
| K(22th)/C13 | 2.79328E-06 | -1.51066E-06 | -8.27324E-09 |
| L(24th)/C14 | -4.10383E-07 | 8.12152E-08 | -3.65093E-11 |
| M(26th)/C15 | 3.10065E-08 | -2.84329E-09 | 1.78828E-11 |
| N(28th)/C16 | -1.23716E-09 | 5.85879E-11 | -6.88474E-13 |
| O(30th)/C17 | 2.06573E-11 | -5.39835E-13 | 8.99540E-15 |

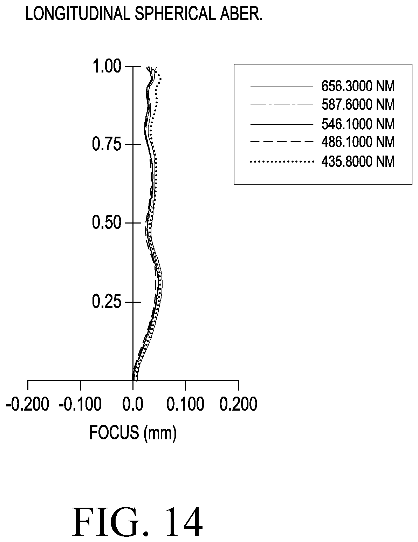

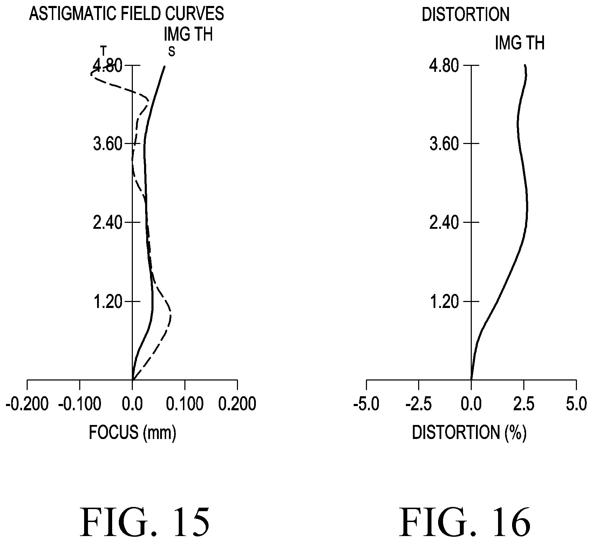

FIG. 13 is a diagram illustrating a lens assembly 600 according to an embodiment of the disclosure. FIG. 14 is a graph illustrating spherical aberration of the lens assembly 600 of FIG. 13 according to an embodiment of the disclosure. FIG. 15 is a graph illustrating astigmatism of the lens assembly 600 of FIG. 13 according to an embodiment of the disclosure. FIG. 16 is a graph illustrating distortion rates of the lens assembly 600 of FIG. 13 according to an embodiment of the disclosure.

The lens assembly 600 of FIG. 13 may have a focal length of approximately 5.20mm, an F-number of approximately 1.58, and/or an angle of view of approximately 83 degrees. In an embodiment, the lens assembly 600 may satisfy at least some of the shapes and refractive powers of the lens(es) L1, L2, L3, L4, L5, L6, and L7 (e.g., the lens surface(s)) described above, and/or the conditions presented by [Equations], be manufactured to exemplary specifications described in [Table 11] below, and have aspheric coefficients listed in [Table 12], [Table 13], [Table 14], and [Table 15].

[Table 11]

| Lens surface (Surf) | Radius of curvature (Radius) | Thickness (Thick) | Refractive index (nd) | Abbe number (vd) |
|---|---|---|---|---|
| obj | infinity | 1000 | | |
| 1 | infinity | 0.3 | | |
| 2 | 2.219 | 0.845 | 1.54401 | 55.91 |
| 3 | 15.152 | 0.02 | | |
| 4 | 4.171 | 0.26 | 1.67073 | 19.23 |
| 5 | 2.487 | 0.215 | | |
| sto | 6.269 | 0.38 | 1.54401 | 55.91 |
| 7 | 13.319 | 0.405 | | |
| 8 | -23.095 | 0.281 | 1.67073 | 19.23 |
| 9 | 23.784 | 0.2 | | |
| 10 | 3.72 | 0.322 | 1.63914 | 23.51 |
| 11 | 4.504 | 0.526 | | |
| 12 | 7.811 | 0.873 | 1.54401 | 55.91 |
| 13 | -3.65 | 0.44 | | |
| 14 | -1351.7 | 0.401 | 1.54401 | 55.91 |
| 15 | 1.862 | 0.187 | | |
| 16 | infinity | 0.11 | 1.5168 | 64.2 |
| 17 | infinity | 0.755 | | |
| img | infinity | 0.03 | | |

[Table 12]

| Lens surface (Surf) | 2_ASP | 3_ASP | 4_ASP | 5_ASP |
|---|---|---|---|---|
| Radius | 2.21903E+00 | 1.51518E+01 | 4.17147E+00 | 2.48713E+00 |
| K(Conic) | -1.46376E+00 | 0.00000E+00 | 0.00000E+00 | -8.82392E-02 |
| A(4th)/C4 | 1.46030E-03 | 2.67573E-02 | -1.09665E-02 | -3.78972E-02 |
| B(6th)/C5 | 1.13102E-01 | -5.60130E-02 | -2.58295E-02 | 3.54427E-02 |
| C(8th)/C6 | -5.06907E-01 | 7.39038E-02 | 2.56661E-02 | 1.23114E-01 |
| D(10th)/C7 | 1.44888E+00 | -6.42966E-02 | -1.01563E-02 | -1.80767E+00 |
| E(12th)/C8 | -2.78067E+00 | 3.67389E-02 | 1.60469E-03 | 8.10812E+00 |
| F(14th)/C9 | 3.72312E+00 | -1.34110E-02 | 0.00000E+00 | -2.07908E+01 |
| G(16th)/C10 | -3.56472E+00 | 2.87254E-03 | 0.00000E+00 | 3.47317E+01 |
| H(18th)/C11 | 2.47198E+00 | -3.07268E-04 | 0.00000E+00 | -3.97648E+01 |
| J(20th)/C12 | -1.24364E+00 | 1.06283E-05 | 0.00000E+00 | 3.18148E+01 |
| K(22th)/C13 | 4.49214E-01 | 0.00000E+00 | 0.00000E+00 | -1.77728E+01 |
| L(24th)/C14 | -1.13467E-01 | 0.00000E+00 | 0.00000E+00 | 6.78933E+00 |

(continued)

| Lens surface (Surf) | 2_ASP | 3_ASP | 4_ASP | 5_ASP |
|---|---|---|---|---|
| M(26th)/C15 | 1.90158E-02 | 0.00000E+00 | 0.00000E+00 | -1.68811E+00 |
| N(28th)/C16 | -1.89855E-03 | 0.00000E+00 | 0.00000E+00 | 2.45701E-01 |
| O(30th)/C17 | 8.54323E-05 | 0.00000E+00 | 0.00000E+00 | -1.58419E-02 |

[Table 13]

| Lens surface (Surf) | 6_ASP | 7_ASP | 8_ASP | 9_ASP |
|---|---|---|---|---|
| Radius | 6.26860E+00 | 1.33190E+01 | -2.30955E+01 | 2.37841E+01 |
| K(Conic) | 6.50801E+00 | -1.00000E+00 | 0.00000E+00 | 0.00000E+00 |
| A(4th)/C4 | 3.09653E-03 | -1.80650E-02 | -7.38458E-02 | -1.19727E-01 |
| B(6th)/C5 | 1.91716E-02 | 2.52821E-01 | 1.09871E-01 | 1.89457E-01 |
| C(8th)/C6 | -4.84581E-02 | -1.68303E+00 | -3.49911E-01 | -5.02202E-01 |
| D(10th)/C7 | 6.21605E-02 | 6.76410E+00 | 7.56662E-01 | 1.22333E+00 |
| E(12th)/C8 | -4.36691E-02 | -1.71528E+01 | -1.21107E+00 | -2.34570E+00 |
| F(14th)/C9 | 1.80536E-02 | 2.78630E+01 | 1.35531E+00 | 3.18647E+00 |
| G(16th)/C10 | -3.09338E-03 | -2.74339E+01 | -1.01062E+00 | -2.99034E+00 |
| H(18th)/C11 | 0.00000E+00 | 1.14919E+01 | 4.73448E-01 | 1.91881E+00 |
| J(20th)/C12 | 0.00000E+00 | 7.95410E+00 | -1.25053E-01 | -8.23675E-01 |
| K(22th)/C13 | 0.00000E+00 | -1.59245E+01 | 1.40964E-02 | 2.25303E-01 |
| L(24th)/C14 | 0.00000E+00 | 1.17052E+01 | 0.00000E+00 | -3.53402E-02 |
| M(26th)/C15 | 0.00000E+00 | -4.78108E+00 | 0.00000E+00 | 2.40643E-03 |
| N(28th)/C16 | 0.00000E+00 | 1.07149E+00 | 0.00000E+00 | 0.00000E+00 |
| O(30th)/C17 | 0.00000E+00 | -1.03340E-01 | 0.00000E+00 | 0.00000E+00 |

[Table 14]

| Lens surface (Surf) | 10_ASP | 11_ASP | 12_ASP |
|---|---|---|---|
| Radius | 3.71987E+00 | 4.50426E+00 | 7.81085E+00 |
| K(Conic) | -2.72447E+01 | -2.98558E+01 | 5.45768E+00 |
| A(4th)/C4 | -1.00440E-01 | -6.79560E-02 | -8.14734E-03 |
| B(6th)/C5 | 2.27788E-01 | 4.55722E-02 | 1.51173E-02 |
| C(8th)/C6 | -7.58322E-01 | -5.93732E-02 | -6.84218E-02 |
| D(10th)/C7 | 2.05144E+00 | 9.70805E-02 | 1.01445E-01 |
| E(12th)/C8 | -3.94144E+00 | -1.06764E-01 | -9.32689E-02 |
| F(14th)/C9 | 5.38562E+00 | 7.43965E-02 | 5.88469E-02 |
| G(16th)/C10 | -5.32216E+00 | -3.46338E-02 | -2.62969E-02 |
| H(18th)/C11 | 3.82992E+00 | 1.12303E-02 | 8.39106E-03 |
| J(20th)/C 12 | -2.00030E+00 | -2.58899E-03 | -1.90765E-03 |
| K(22th)/C13 | 7.47645E-01 | 4.24229E-04 | 3.05591E-04 |
| L(24th)/C14 | -1.94293E-01 | -4.83132E-05 | -3.36496E-05 |
| M(26th)/C15 | 3.32520E-02 | 3.62966E-06 | 2.42270E-06 |
| N(28th)/C16 | -3.36109E-03 | -1.61344E-07 | -1.02686E-07 |

(continued)

| Lens surface (Surf) | 10_ASP | 11_ASP | 12_ASP |
|---|---|---|---|
| O(30th)/C17 | 1.51660E-04 | 3.20593E-09 | 1.94313E-09 |

[Table 15]

| Lens surface (Surf) | 13_ASP | 14_ASP | 15_ASP |
|---|---|---|---|
| Radius | -3.64972E+00 | -1.35170E+03 | 1.86174E+00 |
| K(Conic) | -1.27843E+00 | 1.12616E+05 | -9.67776E+00 |
| A(4th)/C4 | 5.85651E-02 | -1.49652E-01 | -6.59532E-02 |
| B(6th)/C5 | -1.54965E-02 | 1.22824E-01 | 3.67263E-02 |
| C(8th)/C6 | -4.51507E-03 | -8.88141E-02 | -1.86488E-02 |
| D(10th)/C7 | -5.99618E-04 | 4.37809E-02 | 6.88160E-03 |
| E(12th)/C8 | 5.39877E-03 | -1.39624E-02 | -1.77053E-03 |
| F(14th)/C9 | -3.97070E-03 | 2.99249E-03 | 3.19360E-04 |
| G(16th)/C10 | 1.52503E-03 | -4.47665E-04 | -4.08330E-05 |
| H(18th)/C11 | -3.71411E-04 | 4.78588E-05 | 3.72380E-06 |
| J(20th)/C12 | 6.10042E-05 | -3.68928E-06 | -2.41913E-07 |
| K(22th)/C13 | -6.86246E-06 | 2.03884E-07 | 1.10720E-08 |
| L(24th)/C14 | 5.21677E-07 | -7.88957E-09 | -3.47945E-10 |
| M(26th)/C15 | -2.56192E-08 | 2.03151E-10 | 7.13166E-12 |
| N(28th)/C16 | 7.33418E-10 | -3.12789E-12 | -8.57109E-14 |
| O(30th)/C17 | -9.29259E-12 | 2.17900E-14 | 4.57407E-16 |

According to an embodiment, regarding the conditions presented by [Equation 1] to [Equation 6], values calculated from lens data of the lens assemblies 400, 500, and 600 of FIGS. 5, 9, and 13 are illustrated in [Table 16] below.

[Table 16]

| | Embodiment 1 | Embodiment 2 | Embodiment 3 |
|---|---|---|---|
| Equation 1 | 1.12 | 1.11 | 1.11 |
| Equation 2 | 1.58 | 1.59 | 1.59 |
| Equation 3 | 0.65 | 0.65 | 0.65 |
| Equation 4 | 0.278 | 0.258 | 0.259 |
| Equation 5 | -18.99 | -20.29 | -17.39 |
| Equation 6 | 19.23 | 19.23 | 19.23 |

As described above, a lens assembly (e.g., the lens assembly 400, 500, or 600 of FIG. 5, FIG. 9, and/or FIG. 13) according to embodiment(s) of the disclosure may have an F number of approximately 1.5 and a slim factor of approximately 0.68 or less, thereby facilitating miniaturization and manufacturing in terms of the materials or shapes of the lenses. In an embodiment, the lens assembly 400, 500, or 600 may be miniaturized, while facilitating aberration control and easily securing an amount of peripheral light, thereby providing optical performance suitable for a high-pixel sensor having an image height of approximately 4.8mm or more. In an embodiment, as appropriate gaps are secured in arranging the lenses, the lenses may be assembled in a state where the edges or side surfaces of the lenses are in contact with or supported by a barrel structure, even without disposing a separate structure (e.g., spacer) between the lenses. For example, this may suppress a flare phenomenon caused by the separate structure (e.g., spacer) and contribute to reduction of manufacturing cost (e.g., material cost).

The effects that may be obtained from the disclosure are not limited to the effects mentioned above, and other effects that are not mentioned may be clearly understood by those skilled in the art from the following description.

As described above, according to an embodiment of the disclosure, a lens assembly (e.g., the lens assembly 400, 500, or 600 of FIG. 2, FIG. 5, FIG. 9, and/or FIG. 13) may include an image sensor (e.g., the image sensor I or 230 of FIG. 2, FIG. 5, FIG. 9, and/or FIG. 13), and seven lenses (e.g., the lenses L1, L2, L3, L4, L5, L6, and L7 of FIG. 5, FIG. 9, and/or FIG. 13) sequentially arranged along an optical axis (e.g., the optical axis O of FIG. 5, FIG. 9, and/or FIG. 13) in a direction toward the image sensor, and including a first lens (e.g., the first lens L1 of FIG. 5, FIG. 9, and/or FIG. 13) having a positive refractive power, a second lens (e.g., the second lens L2 of FIG. 5, FIG. 9, and/or FIG. 13) having a negative refractive power, a third lens (e.g., the third lens L3 of FIG. 5, FIG. 9, and/or FIG. 13) having a positive refractive power, a fourth lens (e.g., the fourth lens L4 of FIG. 5, FIG. 9, and/or FIG. 13) having a negative refractive power, a fifth lens (e.g., the fifth lens L5 of FIG. 5, FIG. 9, and/or FIG. 13) having a positive refractive power, a sixth lens (e.g., the sixth lens L6 of FIG. 5, FIG. 9, and/or FIG. 13) having a positive refractive power, and a seventh lens (e.g., the seventh lens L7 of FIG. 5, FIG. 9, and/or FIG. 13) having a negative refractive power. In an embodiment, the lens assembly may satisfy [Conditional Expression 1] to [Conditional Expression 3] below.

$$[Conditional\ Expression\ 1]$$

$$1 =< efl/f1 =< 2$$

$$[Conditional\ Expression\ 2]$$

$$1.3 =< Fno =< 1.7$$

$$[Conditional\ Expression\ 3]$$

$$0.59 =< TTL/ImgH*2 =< 0.68$$

Herein, 'efl' may be an effective focal length of the lens assembly, 'f1' may be a focal length of the first lens, 'Fno' may be an F number of the lens assembly, 'TTL' may be a distance from an object-side surface (e.g., the surface denoted by 'S1' in FIG. 5) of the first lens to the image sensor, and 'ImgH' may be a maximum distance from the optical axis to an edge of an imaging plane (e.g., the imaging plane img of FIG. 5, FIG. 9, and/or FIG. 13) of the image sensor.

According to an embodiment, the lens assembly may further include an aperture disposed between the first lens and the seventh lens (e.g., on the object-side surface S5 of the third lens L3 in FIG. 5). In an embodiment, the lens assembly may satisfy [Conditional Expression 4] below.

$$[Conditional\ Expression\ 4]$$

$$0.1 =< T1/TA =< 0.3$$

Herein, 'T1' may be a distance from the object-side surface of the first lens to the aperture, and 'TA' may be a distance from the object-side surface of the first lens to a sensor-side surface (e.g., the surface denoted by 'S15' in FIG. 5) of the seventh lens.

According to an embodiment, the lens assembly may satisfy [Conditional Expression 5] below.

$$[Conditional\ Expression\ 5]$$

$$-50 =< f23 < 0$$

Herein, 'f23' may be a focal length of a combination of the second lens and the third lens.

According to an embodiment, the fifth lens may include a convex object-side surface (e.g., the surface denoted by 'S10' in FIG. 5) and a concave sensor-side surface (e.g., the surface denoted by 'S11' in FIG. 5), and at least one of the object-side surface or the sensor-side surface of the fifth lens may include an inflection point.

According to an embodiment, the first lens, the second lens, and the third lens are meniscus lenses having a convex object-side surface and a concave sensor-side surface. In an embodiment, the lens assembly may satisfy [Conditional Expression 6] below.

[Conditional Expression 6]

$$17 =< \text{vd-min} =< 25$$

Herein, 'vd-min' may be a minimum Abbe number of Abbe numbers of the lenses.

According to an embodiment, the second lens, the fourth lens, and the fifth lens may have refractive indexes of 1.6 or more and 1.7 or less.

According to an embodiment, the fourth lens may be a meniscus lens having a concave object-side surface (e.g., the surface denoted by 'S8' in FIG. 5) and a convex sensor-side surface (e.g., the surface denoted by 'S9' in FIG. 5).

According to an embodiment, each of at least one of an object-side surface or a sensor-side surface of the fourth lens, at least one of an object-side surface or a sensor-side surface of the fifth lens, at least one of an object-side surface or a sensor-side surface of the sixth lens, and at least one of an object-side surface or a sensor-side surface of the seventh lens may include an inflection point.

According to an embodiment, the sixth lens may include a convex object-side surface.

According to an embodiment, the object-side surface of the seventh lens may be concave in a paraxial region through which the optical axis passes and convex in a peripheral region around the paraxial region. In an embodiment, the sensor-side surface of the seventh lens may be concave in the paraxial region and convex in the peripheral region. In an embodiment, the peripheral region may be inclined toward the sixth lens.

According to an embodiment of the disclosure, an electronic device (e.g., the electronic device 101, 102, 104, and 300 of FIGS. 1 to 4) may include a lens assembly (e.g., the lens assembly 400, 500, or 600 of FIG. 5, FIG. 9, and/or FIG. 13) and a processor (e.g., the processor 120 of FIG. 1 or the image signal processor 260 of FIG. 2) configured to obtain an object image using the lens assembly. In an embodiment, the lens assembly may include an image sensor (e.g., the image sensor I or 230 of FIG. 2, FIG. 5, FIG. 9, and/or FIG. 13), and seven lenses (e.g., the lenses L1, L2, L3, L4, L5, L6, and L7 of FIG. 5, FIG. 9, and/or FIG. 13) sequentially arranged along an optical axis (e.g., the optical axis O of FIG. 5, FIG. 9, and/or FIG. 13) in a direction toward the image sensor, and including a first lens (e.g., the first lens L1 of FIG. 5, FIG. 9, and/or FIG. 13) having a positive refractive power, a second lens (e.g., the second lens L2 of FIG. 5, FIG. 9, and/or FIG. 13) having a negative refractive power, a third lens (e.g., the third lens L3 of FIG. 5, FIG. 9, and/or FIG. 13) having a positive refractive power, a fourth lens (e.g., the fourth lens L4 of FIG. 5, FIG. 9, and/or FIG. 13) having a negative refractive power, a fifth lens (e.g., the fifth lens L5 of FIG. 5, FIG. 9, and/or FIG. 13) having a positive refractive power, a sixth lens (e.g., the sixth lens L6 of FIG. 5, FIG. 9, and/or FIG. 13) having a positive refractive power, and a seventh lens (e.g., the seventh lens L7 of FIG. 5, FIG. 9, and/or FIG. 13) having a negative refractive power. In an embodiment, the lens assembly may satisfy [Conditional Expression 7] to [Conditional Expression 9] below.

[Conditional Expression 7]

$$1 =< \text{efl/f1} =< 2$$

[Conditional Expression 8]

$$1.3 =< \text{Fno} =< 1.7$$

[Conditional Expression 9]

$$0.59 =< \text{TTL/ImgH*2} =< 0.68$$

Herein, 'efl' may be an effective focal length of the lens assembly, 'f1' may be a focal length of the first lens, 'Fno' may be an F number of the lens assembly, 'TTL' may be a distance from an object-side surface (e.g., the surface denoted by 'S1' in FIG. 5) of the first lens to the image sensor, and 'ImgH' may be a maximum distance from the optical axis to an edge of an imaging plane (e.g., the imaging plane img of FIG. 5, FIG. 9, and/or FIG. 13) of the image sensor.

According to an embodiment, the lens assembly may further include an aperture disposed between the first lens and the seventh lens (e.g., on the object-side surface S5 of the third lens L3 in FIG. 5). In an embodiment, the lens assembly may satisfy [Conditional Expression 10] below.

[Conditional Expression 10]

$$0.1 =< \text{T1/TA} =< 0.3$$

Herein, 'T1' may be a distance from the object-side surface of the first lens to the aperture, and 'TA' may be a distance from the object-side surface of the first lens to a sensor-side surface (e.g., the surface denoted by 'S15' in FIG. 5) of the seventh lens.

According to an embodiment, the lens assembly may satisfy [Conditional Expression 11] below.

[Conditional Expression 11]

$$-50 =< f23 < 0$$

Herein, 'f23' may be a focal length of a combination of the second lens and the third lens.

According to an embodiment, the fifth lens may include a convex object-side surface (e.g., the surface denoted by 'S10' in FIG. 5) and a concave sensor-side surface (e.g., the surface denoted by 'S11' in FIG. 5), and at least one of the object-side surface or the sensor-side surface of the fifth lens may include an inflection point.

According to an embodiment, the first lens, the second lens, and the third lens are meniscus lenses having a convex object-side surface and a concave sensor-side surface. In an embodiment, the lens assembly may satisfy [Conditional Expression 12] below.

[Conditional Expression 12]

$$17 =< vd\text{-}min =< 25$$

Herein, 'vd-min' may be a minimum Abbe number of Abbe numbers of the lenses.

According to an embodiment, the second lens, the fourth lens, and the fifth lens may have refractive indexes of 1.6 or more and 1.7 or less.

According to an embodiment, the fourth lens may be a meniscus lens having a concave object-side surface (e.g., the surface denoted by 'S8' in FIG. 5) and a convex sensor-side surface (e.g., the surface denoted by 'S9' in FIG. 5).

According to an embodiment, each of at least one of an object-side surface or a sensor-side surface of the fourth lens, at least one of an object-side surface or a sensor-side surface of the fifth lens, at least one of an object-side surface or a sensor-side surface of the sixth lens, and at least one of an object-side surface or a sensor-side surface of the seventh lens may include an inflection point.

According to an embodiment, the sixth lens may include a convex object-side surface.

According to an embodiment, the object-side surface of the seventh lens may be concave in a paraxial region through which the optical axis passes and convex in a peripheral region around the paraxial region. In an embodiment, the sensor-side surface of the seventh lens may be concave in the paraxial region and convex in the peripheral region. In an embodiment, the peripheral region may be inclined toward the sixth lens.

While the disclosure has been described with respect to an embodiment, by way of example, it should be understood that the embodiment is intended to be illustrative, not limiting the disclosure. It will be apparent to those skilled in the art that various changes in form and detailed construction may be made therein without departing from the scope of the disclosure, including the appended claims and their equivalents.

**Claims**

1. A lens assembly (400; 500; 600) comprising:

   an image sensor (I); and
   seven lenses (L1, L2, L3, L4, L5, L6, L7) sequentially arranged along an optical axis (O) in a direction toward the image sensor, and including a first lens (L1) having a positive refractive power, a second lens (L2) having a negative refractive power, a third lens (L3) having a positive refractive power, a fourth lens (L4) having a negative refractive power, a fifth lens (L5) having a positive refractive power, a sixth lens (L6) having a positive refractive power, and a seventh lens (L7) having a negative refractive power,
   wherein the lens assembly satisfies [Conditional Expression 1] to [Conditional Expression 3] below,

[Conditional Expression 1]

$$1 =< efl/f1 =< 2$$

[Conditional Expression 2]

$$1.3 =< Fno =< 1.7$$

[Conditional Expression 3]

$$0.59 =< TTL/(ImgH*2) =< 0.68$$

where, 'efl' is an effective focal length of the lens assembly, 'f1' is a focal length of the first lens, 'Fno' is an F number of the lens assembly, 'TTL' is a distance from an object-side surface of the first lens to the image sensor, and 'ImgH' is a maximum distance from the optical axis to an edge of an imaging plane (img) of the image sensor.

2. The lens assembly of claim 1, further including an aperture disposed between the first lens and the seventh lens, wherein the lens assembly satisfies [Conditional Expression 4] below,

[Conditional Expression 4]

$$0.1 =< T1/TA =< 0.3$$

where 'T1' is a distance from the object-side surface of the first lens to the aperture, and 'TA' is a distance from the object-side surface of the first lens to a sensor-side surface of the seventh lens.

3. The lens assembly of claim 1 or 2, wherein the lens assembly satisfies [Conditional Expression 5] below,

[Conditional Expression 5]

$$-50 =< f23 < 0$$

where 'f23' is a focal length of a combination of the second lens and the third lens.

4. The lens assembly of any one of claims 1 to 3, wherein the fifth lens includes a convex object-side surface and a concave sensor-side surface, and at least one of the object-side surface or the sensor-side surface of the fifth lens includes an inflection point.

5. The lens assembly of any one of claims 1 to 4, wherein the first lens, the second lens, and the third lens are meniscus lenses having a convex object-side surface and a concave sensor-side surface, and
wherein the lens assembly satisfies [Conditional Expression 6]

[Conditional Expression 6]

$$17 =< vd\text{-}min =< 25$$

where 'vd-min' is a minimum Abbe number of Abbe numbers of the lenses.

6. The lens assembly of any one of claims 1 to 5, wherein the second lens, the fourth lens, and the fifth lens have refractive indexes of 1.6 or more and 1.7 or less.

7. The lens assembly of any one of claims 1 to 6, wherein the fourth lens is a meniscus lens having a concave object-side surface and a convex sensor-side surface.

8. The lens assembly of any one of claims 1 to 7, wherein each of at least one of an object-side surface or a sensor-side surface of the fourth lens, at least one of an object-side surface or a sensor-side surface of the fifth lens, at least one of an object-side surface or a sensor-side surface of the sixth lens, and at least one of an object-side surface or a sensor-side surface of the seventh lens includes an inflection point.

9. The lens assembly of any one of claims 1 to 8, wherein the sixth lens includes a convex object-side surface.

10. The lens assembly of any one of claims 1 to 9, wherein the object-side surface of the seventh lens is concave in a paraxial region through which the optical axis passes and convex in a peripheral region around the paraxial region,

    wherein the sensor-side surface of the seventh lens is concave in the paraxial region and convex in the peripheral region, and
    wherein the peripheral region is inclined toward the sixth lens.

11. An electronic device (101; 102; 104; 300) comprising:

    the lens assembly (400; 500; 600) of any one of claims 1 to 10; and
    a processor (120; 260) configured to obtain an object image using the lens assembly.

FIG. 1

EP 4 571 384 A1

200

280

## CAMERA MODULE

220

**FLASH**

210

230

**IMAGE SENSOR**

240

**IMAGE STABILIZER**

LENS
ASSEMBLY

250

**MEMORY**

260

**IMAGE SIGNAL
PROCESSOR**

# FIG. 2

FIG. 3

FIG. 4

FIG. 5

LONGITUDINAL SPHERICAL ABER.

FIG. 6

ASTIGMATIC FIELD CURVES
IMG TH
S T

4.80

3.60

2.40

2.20

-0.200  -0.100   0.0    0.100   0.200
FOCUS (mm)

DISTORTION
IMG TH

4.80

3.60

2.40

1.20

-5.0    -2.5    0.0    2.5    5.0
DISTORTION (%)

# FIG. 7

# FIG. 8

FIG. 9

LONGITUDINAL SPHERICAL ABER.

FIG. 10

ASTIGMATIC FIELD CURVES

FIG. 11

DISTORTION

FIG. 12

FIG. 13

LONGITUDINAL SPHERICAL ABER.

FIG. 14

ASTIGMATIC FIELD CURVES

IMG TH

T     S
4.80

3.60

2.40

1.20

-0.200  -0.100   0.0   0.100  0.200

FOCUS (mm)

## FIG. 15

DISTORTION

IMG TH

4.80

3.60

2.40

1.20

-5.0   -2.5   0.0   2.5   5.0

DISTORTION (%)

## FIG. 16

# EP 4 571 384 A1

<table>
<tr><td colspan="2"><b>INTERNATIONAL SEARCH REPORT</b></td><td>International application No.<br><br><b>PCT/KR2023/013431</b></td></tr>
</table>

<table>
<tr><td colspan="3"><b>A. CLASSIFICATION OF SUBJECT MATTER</b><br><br><b>G02B 13/00</b>(2006.01)i; <b>G02B 9/64</b>(2006.01)i; <b>G02B 15/14</b>(2006.01)i; <b>G02B 3/00</b>(2006.01)i; <b>G02B 13/18</b>(2006.01)i; <b>H04N 23/55</b>(2023.01)i; <b>G02B 3/02</b>(2006.01)i<br><br>According to International Patent Classification (IPC) or to both national classification and IPC</td></tr>
<tr><td colspan="3"><b>B. FIELDS SEARCHED</b></td></tr>
<tr><td colspan="3">Minimum documentation searched (classification system followed by classification symbols)<br><br>G02B 13/00(2006.01); G02B 13/06(2006.01); G02B 13/18(2006.01); G02B 9/64(2006.01); H04N 5/225(2006.01)</td></tr>
<tr><td colspan="3">Documentation searched other than minimum documentation to the extent that such documents are included in the fields searched<br><br>Korean utility models and applications for utility models: IPC as above<br>Japanese utility models and applications for utility models: IPC as above</td></tr>
<tr><td colspan="3">Electronic data base consulted during the international search (name of data base and, where practicable, search terms used)<br><br>eKOMPASS (KIPO internal) & keywords: 제7 렌즈(7th lens), 전장(TTL), 상고(ImgH), F넘버(Fno), 초점 거리(focal distance)</td></tr>
</table>

<table>
<tr><td colspan="3"><b>C. DOCUMENTS CONSIDERED TO BE RELEVANT</b></td></tr>
<tr><td>Category*</td><td>Citation of document, with indication, where appropriate, of the relevant passages</td><td>Relevant to claim No.</td></tr>
<tr><td>X<br><br>Y</td><td>US 2022-0159154 A1 (JIANGXI JINGCHAO OPTICAL CO., LTD.) 19 May 2022 (2022-05-19)<br>See paragraphs [0055] and [0081]-[0094], tables 1a, 1b, 21 and 23, and figure 1a.</td><td>1-5,7-11<br><br>6</td></tr>
<tr><td>Y</td><td>KR 10-2020-0003552 A (SAMSUNG ELECTRO-MECHANICS CO., LTD.) 10 January 2020 (2020-01-10)<br>See paragraph [0076], tables 4 and 5 and figure 7.</td><td>6</td></tr>
<tr><td>A</td><td>CN 108051898 A (ZHEJIANG SUNNY OPTICS CO., LTD.) 18 May 2018 (2018-05-18)<br>See paragraphs [0137]-[0154], table 10 and figure 16.</td><td>1-11</td></tr>
<tr><td>A</td><td>JP 2021-184073 A (AAC OPTICS SOLUTIONS PTE LTD.) 02 December 2021 (2021-12-02)<br>See table 13 and figure 5.</td><td>1-11</td></tr>
<tr><td>A</td><td>CN 107577034 A (ZHEJIANG SUNNY OPTICS CO., LTD.) 12 January 2018 (2018-01-12)<br>See tables 1 and 3 and figure 1.</td><td>1-11</td></tr>
</table>

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 December 2023** | **05 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/013431**

| Patent document cited in search report | | | Publication date (day/month/year) | Patent family member(s) | | | Publication date (day/month/year) |
|---|---|---|---|---|---|---|---|
| US | 2022-0159154 | A1 | 19 May 2022 | WO | 2021-022561 | A1 | 11 February 2021 |
| KR | 10-2020-0003552 | A | 10 January 2020 | CN | 110673301 | A | 10 January 2020 |
| | | | | CN | 110673301 | B | 04 November 2022 |
| | | | | CN | 115437122 | A | 06 December 2022 |
| | | | | CN | 115437123 | A | 06 December 2022 |
| | | | | CN | 210376836 | U | 21 April 2020 |
| | | | | US | 11796763 | B2 | 24 October 2023 |
| | | | | US | 2020-0003995 | A1 | 02 January 2020 |
| CN | 108051898 | A | 18 May 2018 | CN | 108051898 | B | 16 June 2023 |
| | | | | US | 11650399 | B2 | 16 May 2023 |
| | | | | US | 2020-0233187 | A1 | 23 July 2020 |
| | | | | WO | 2019-114524 | A1 | 20 June 2019 |
| JP | 2021-184073 | A | 02 December 2021 | AU | 2021-277366 | A1 | 25 November 2021 |
| | | | | CN | 111552063 | A | 18 August 2020 |
| | | | | CN | 111552063 | B | 30 July 2021 |
| | | | | CN | 111669061 | A | 15 September 2020 |
| | | | | CN | 111669061 | B | 02 March 2021 |
| | | | | CN | 113708869 | A | 26 November 2021 |
| | | | | CN | 113708897 | A | 26 November 2021 |
| | | | | CN | 113708899 | A | 26 November 2021 |
| | | | | CN | 113708899 | B | 21 April 2023 |
| | | | | CN | 113709912 | A | 26 November 2021 |
| | | | | CN | 114390510 | A | 22 April 2022 |
| | | | | CN | 114390694 | A | 22 April 2022 |
| | | | | EP | 4131831 | A1 | 08 February 2023 |
| | | | | EP | 4145729 | A1 | 08 March 2023 |
| | | | | EP | 4145738 | A1 | 08 March 2023 |
| | | | | EP | 4152831 | A1 | 22 March 2023 |
| | | | | EP | 4156489 | A1 | 29 March 2023 |
| | | | | EP | 4236406 | A1 | 30 August 2023 |
| | | | | EP | 4236529 | A1 | 30 August 2023 |
| | | | | JP | 2021-184070 | A | 02 December 2021 |
| | | | | JP | 2023-522733 | A | 31 May 2023 |
| | | | | JP | 2023-526843 | A | 23 June 2023 |
| | | | | JP | 2023-546855 | A | 08 November 2023 |
| | | | | JP | 2023-546934 | A | 08 November 2023 |
| | | | | JP | 6937411 | B1 | 22 September 2021 |
| | | | | JP | 6973980 | B1 | 01 December 2021 |
| | | | | KR | 10-2023-0011906 | A | 25 January 2023 |
| | | | | KR | 10-2023-0012565 | A | 26 January 2023 |
| | | | | KR | 10-2023-0079275 | A | 05 June 2023 |
| | | | | KR | 10-2023-0084270 | A | 12 June 2023 |
| | | | | US | 11287616 | B2 | 29 March 2022 |
| | | | | US | 2021-0364741 | A1 | 25 November 2021 |
| | | | | US | 2023-0081816 | A1 | 16 March 2023 |
| | | | | US | 2023-0082194 | A1 | 16 March 2023 |
| | | | | US | 2023-0083549 | A1 | 16 March 2023 |
| | | | | US | 2023-0091501 | A1 | 23 March 2023 |
| | | | | US | 2023-0199065 | A1 | 22 June 2023 |
| | | | | US | 2023-0262534 | A1 | 17 August 2023 |

Form PCT/ISA/210 (patent family annex) (July 2022)

## INTERNATIONAL SEARCH REPORT
### Information on patent family members

International application No.

**PCT/KR2023/013431**

| Patent document cited in search report | | | Publication date (day/month/year) | Patent family member(s) | | | Publication date (day/month/year) |
|---|---|---|---|---|---|---|---|
| | | | | US | 2023-0262664 | A1 | 17 August 2023 |
| | | | | WO | 2021-232497 | A1 | 25 November 2021 |
| | | | | WO | 2021-232498 | A1 | 25 November 2021 |
| | | | | WO | 2021-232927 | A1 | 25 November 2021 |
| | | | | WO | 2021-233209 | A1 | 25 November 2021 |
| | | | | WO | 2021-233289 | A1 | 25 November 2021 |
| | | | | WO | 2021-233297 | A1 | 25 November 2021 |
| | | | | WO | 2021-233313 | A1 | 25 November 2021 |
| | | | | WO | 2021-233328 | A1 | 25 November 2021 |
| | | | | WO | 2021-233356 | A1 | 25 November 2021 |
| | | | | WO | 2022-082939 | A1 | 28 April 2022 |
| | | | | WO | 2022-083073 | A1 | 28 April 2022 |
| | | | | WO | 2022-083325 | A1 | 28 April 2022 |
| | | | | WO | 2022-083611 | A1 | 28 April 2022 |
| | | | | WO | 2022-083612 | A1 | 28 April 2022 |
| CN | 107577034 | A | 12 January 2018 | CN | 107577034 | B | 28 April 2023 |
| | | | | CN | 116360082 | A | 30 June 2023 |
| | | | | CN | 207336905 | U | 08 May 2018 |
| | | | | US | 11029501 | B2 | 08 June 2021 |
| | | | | US | 2019-0170987 | A1 | 06 June 2019 |
| | | | | WO | 2019-080610 | A1 | 02 May 2019 |

Form PCT/ISA/210 (patent family annex) (July 2022)